# EUROPÄISCHE PATENTSCHRIFT

(11) **EP 4 228 927 B1**
(45) Veröffentlichungstag und Bekanntmachung des Hinweises auf die Patenterteilung: **11.06.2025**
(21) Anmeldenummer: 21801029.6
(22) Anmeldetag: 18.10.2021
(51) Int. Cl.: B60R 3/02

(54) **FAHRZEUG MIT PLATTFORMEINHEIT AN EINER KAROSSERIEÖFFNUNG**
VEHICLE WITH PLATFORM UNIT ON A BODY OPENING
VÉHICULE AVEC UNITÉ DE PLATE-FORME SUR UNE OUVERTURE DE LA CARROSSERIE

(30) Priorität: 19.10.2020 DE 102020213182
(43) Veröffentlichungstag der Anmeldung: 23.08.2023
(73) Patentinhaber: Brose Fahrzeugteile SE & Co. Kommanditgesellschaft, Bamberg, 96052 Bamberg (DE); Bode - Die Tür GmbH, 34123 Kassel (DE)
(72) Erfinder: STÜBINGER, Jörg, 95336 Mainleus (DE); MUSCHEL, Daniel, 97072 Würzburg (DE); HUGEL, Harald, 96052 Bamberg (DE); FÖRSTER, Thomas, 90459 Nürnberg (DE); PANHANS, Lukas, 96465 Neustadt bei Coburg (DE); GITTER, Christian, 97475 Zeil (DE)
(74) Vertreter: Maikowski & Ninnemann Patentanwälte Partnerschaft mbB
(86) Internationale Anmeldenummer: PCT/EP2021/078813
(87) Internationale Veröffentlichungsnummer: WO 2022/084251

(56) Entgegenhaltungen:
- EP-A1- 1 862 628
- EP-A1- 3 501 467
- DE-A1- 10 151 931
- DE-A1- 102018 128 560
- DE-U1- 29 615 570
- DE-U1- 29 814 814
- GB-A- 2 372 482
- KR-A- 20180 052 349
- US-A- 3 710 962
- US-A- 5 259 081
- US-B2- 7 001 132

## Beschreibung

Die vorgeschlagene Lösung betrifft ein Fahrzeug, mit einer Karosserieöffnung, an der über eine flächige Plattformeinheit eine Erleichterung eines Zugangs in das Fahrzeug möglich ist.

Vergleichbare Fahrzeuge sind in der US 5,259,081 A und DE 10151931 A1 beschrieben.

Aus dem Stand der Technik und insbesondere dem öffentlichen Nahverkehr sind Fahrzeuge mit Plattformeinheiten für die Erleichterung eines Einstiegs in und eines Ausstiegs aus einem Fahrzeug weithin bekannt. Typischerweise handelt es sich hierbei um manuell oder motorisch ausfahrbare Platten oder Rampen, mit denen ein Spalt zwischen einer Einstiegskante an der Karosserieöffnung und einem Untergrund oder einer gegenüberliegenden Bordstein- oder Bahnsteigkante überbrückt werden soll. Gerade im Zusammenhang mit Straßenfahrzeugen sind aber die Einsatzmöglichkeiten und Funktionalitäten derartiger Plattformeinheiten regelmäßig begrenzt. Zudem sind Plattformeinheiten an Fahrzeugen typischerweise vollständig an einem Fahrzeugboden angeordnet, um dort in einem eingefahrenen Zustand untergebracht zu werden. Dies erschwert dann aber unter Umständen erhebliche den konstruktiven Aufwand, wenn über die Plattformeinheit zusätzliche Funktionen bereitgestellt werden sollen, insbesondere wenn die Plattformeinheit beispielsweise als Teil einer Hebevorrichtung nutzbar sein soll, um mobilitätseingeschränkten Personen nach Art eines Fahrstuhls den Zugang zu dem Fahrzeug respektive den Ausstieg aus dem Fahrzeug zu erleichtern. Der Bedarf für dahingehend verbesserte Fahrzeuge erhöht sich dabei insbesondere bei autonom fahrenden Fahrzeugen, da hier kein menschlicher Fahrzeugführer mehr zwingend vorhanden sein muss, der bei der Handhabung einer Plattformeinheit Unterstützung leisten könnte.

Hier schafft ein Fahrzeug des Anspruchs 1 Abhilfe.

So ist insbesondere ein Fahrzeug vorgeschlagen, bei dem wenigstens ein Teil einer flächigen Plattformeinheit, die zur Erleichterung eines Zugangs in das Fahrzeug über eine Karosserieöffnung vorgesehen ist, durch mindestens ein verstellbares, flächiges Plattformelement gebildet ist, das
a) einen Teil mindestens einer für das zumindest teilweise Verschließen der Karosserieöffnung vorgesehenen Tür bildet, der in einer Schließposition der Tür zumindest einen Teil der Karosserieöffnung verschließt, oder
b) in wenigstens einer Verstellposition an einem flächigen Türblattelement der mindestens einen Tür festgelegt und/oder abgestützt ist.

Ist das flächige Plattformelement gemäß der vorstehenden Variante a) ein Teil der mindestens einen Tür, der in der Schließposition zumindest einen Teil der Karosserieöffnung verschließt, ist die mindestens eine Tür folglich mehrteilig (mindestens zweiteilig) ausgeführt und umfasst zusätzlich zu dem Plattformelement beispielsweise wenigstens ein Türblattelement. Ist das Plattformelement gemäß der vorstehenden Variante b) in wenigstens einer Verstellposition an einem flächigen Türblattelement der mindestens einen Tür festgelegt und/oder hieran abgestützt, ist das Plattformelement zwischen wenigstens zwei unterschiedlichen Verstellpositionen verstellbar und in wenigstens einer dieser Verstellpositionen beispielsweise an einem flächigen Türblattelement der mindestens einen Tür gehalten oder arretiert und/oder in wenigstens einer dieser Verstellpositionen, insbesondere während einer Verstellbewegung zwischen zwei Verstellpositionen, an dem flächigen Türblattelement abgestützt.

Ein Grundgedanke der vorgeschlagenen Lösung ist es somit, an mindestens einer Tür des Fahrzeugs wenigstens ein flächiges, eine Tritt- und/oder Ladefläche wenigstens mit definierendes Plattformelement vorzusehen oder zumindest hieran festzulegen oder abzustützen, um damit an der Tür eine Funktion für die Plattformeinheit zu integrieren. Hierüber lässt sich nicht nur eine Bandbreite der über die Plattformeinheit zur Verfügung zu stellenden Funktionen leichter erhöhen. Vielmehr ist hierüber auch eine größere Flexibilität bei der Konstruktion verbunden, wenn nicht mehr - wie bisher in der Praxis häufig üblich - sämtliche strukturellen Aspekte einer Plattformeinheit unabhängig von einer (Fahrzeug-) Tür zu gestalten sind. Bisher übliche Konstruktionen sind vor allem darauf fokussiert, eine Beeinträchtigung einer Verstellbewegung der Fahrzeugtür zwischen einer Schließposition und einer Öffnungsposition und insbesondere die Ausrichtung der Fahrzeugtür in der Öffnungsposition durch eine für die Erleichterung eines Zugangs in das Fahrzeug vorgesehenen Plattformeinheit zu vermeiden.

Vorzugsweise ist das mindestens eine flächige Plattformelement der vorgeschlagenen Lösung fremdkraftbetätigt, d.h., unterstützt und/oder gesteuert durch wenigstens einen Antriebsmotor, verstellbar, sodass eine Verstellbewegung des Plattformelements elektronisch steuerbar ist.

Grundsätzlich kann vorgesehen sein, dass Plattformelement (als Teil der Plattformeinheit) zum Beispiel als Trittstufe und/oder als Teil einer Hebevorrichtung und/oder - in einer verkippten Stellung - als Rampe, die an eine untere Einstiegskante an der Karosserieöffnung angrenzt und einen Spalt zwischen der Einstiegskante und einem Untergrund oder einer der Einstiegskante gegenüberliegenden Bordsteinkante überbrückt, zu nutzen. Das Plattformelement respektive die hiermit zumindest teilweise gebildete Plattformeinheit ist folglich eingerichtet und vorgesehen, an der Karosserieöffnung eine Trittstufe und/oder einen Teil einer Hebevorrichtung und/oder eine Rampe bereitzustellen. Zusätzlich ist in einer Ausführungsvariante das mindestens eine Plattformelement für die Bereitstellung einer Übergabeplattform für den über die Karosserieöffnung zugänglichen Fahrzeuginnenraum, zum Beispiel für Pakete oder Gepäck, oder die Bereitstellung einer Drohnenlandefläche eingerichtet und vorgesehen.

Erfindungsgemäss ist das mindestens eine Plattformelement wenigstens zwischen einer ersten Verstellposition und einer zweiten Verstellposition verstellbar, wobei das Plattformelement in der ersten Verstellposition nicht zur Erleichterung eines Zugangs in das Fahrzeug nutzbar ist und über das in der zweiten Verstellposition vorliegende Plattformelement eine Gebrauchslage der Plattformeinheit definiert ist, in der das Plattformelement zur Erleichterung eines Zugangs in das Fahrzeug nutzbar ist. Die erste Verstellposition definiert somit beispielsweise eine Ruhe- oder Verstauposition des mindestens einen Plattformelements, während das Plattformelement in seiner zweiten Verstellposition beispielsweise in einer Nutzungsposition vorliegt.

Erfidungsgemäss ist die Position der Plattformeinheit, insbesondere deren Höhe und/oder Neigung bezüglich eines in dem Fahrzeuginnenraum des Fahrzeugs vorhandenen Bodens variierbar, wenn die Plattformeinheit bereits in einer Gebrauchslage vorliegt Eine Variation der Position der Plattformeinheit geht dabei mit einer Verstellung des mindestens einen Plattformelements einher. So ist das mindestens eine Plattformelement dann beispielsweise in wenigstens eine dritte Verstellposition verstellbar, um die Plattformeinheit in ihrer Gebrauchslage unterschiedlich positionieren zu können. So kann beispielsweise über ein Verstellen des mindestens einen Plattformelements aus seiner ersten Verstellposition in seine zweite Verstellposition die Plattformeinheit an der Karosserieöffnung ausgeklappt und/oder ausgefahren werden, sodass die Plattformeinheit für die Erleichterung eines Zugangs in einen Fahrzeuginnenraum nutzbar ist. Durch Verstellung des mindestens eine Plattformelements in eine hierzu unterschiedliche dritte Verstellposition kann dann die Position der Plattformeinheit, unter Aufrechterhaltung der grundsätzlichen Nutzbarkeit der Plattformeinheit, variiert werden. So kann beispielsweise durch ein Verstellen des zumindest einen Plattformelements ein Kippen und/oder ein Absenken der Plattformeinheit erfolgen, sodass die Plattformeinheit auf einem Untergrund aufliegen kann. Alternativ oder ergänzend kann mit einer Verstellung des mindestens einen Plattformelements in die wenigstens eine dritte Verstellposition ein Anheben der Plattformeinheit einhergehen, bis eine Oberseite der Plattformeinheit im Wesentlichen oder genau flächenbündig zu einer Vorderkante eines Bodens im Fahrzeuginnenraum und damit zu einer Einstiegskante an der Karosserieöffnung oder höher als eine solche Vorderkante liegt. Mit einer gegenüber der Vorderkante respektive der Einstiegskante des Fahrzeugs erhöht liegenden Plattformeinheit kann beispielsweise eine Drohnenlandefläche oder eine Übergabeplattform als Teil einer (Ein- oder Aus-) Ladehilfe bereitgestellt sein.

In einer Weiterbildung weist die Plattformeinheit einen hinteren Bereich auf, der einer Vorderkante eines in einem Innenraum des Fahrzeugs vorgesehenen und an die Karosserieöffnung angrenzenden Bodenelements zugewandt ist. An einem vorderen Bereich ist die Plattformeinheit über wenigstens ein Stützelement an einem außerhalb des Fahrzeugs vorhandenen Untergrund abstützbar. Das wenigstens eine Stützelement kann somit zur Stabilisierung der Plattformeinheit an einem von einer Einstiegskante der Karosserieöffnung fernen vorderen Bereich der Plattformeinheit beitragen. Insbesondere kann ein solches Stützelement an einem in der zweiten Verstellposition vorliegenden Plattformelement oder einem zusätzlich vorgesehenen, ausklappbaren respektive ausfahrbaren, flächigen Zusatzelement der Plattformeinheit vorgesehen sein.

Beispielsweise weist das Stützelement einen motorischen Antrieb auf, um die Position, insbesondere die Höhe, der in der Gebrauchslage vorliegenden Plattformeinheit zu verändern. Dies schließt beispielsweise ein, dass das Stützelement mit einem teleskopartig verstellbaren (und gegebenenfalls motorisch antreibbaren) Stützfuß ausgebildet ist, um eine Höhe der Plattformeinheit in einer Gebrauchslage variieren zu können. Alternativ oder ergänzend kann das Stützelement an einer Unterseite der Plattformeinheit mit einem Kniehebelmechanismus vorgesehen sein, um ein Anheben der Plattformeinheit nach dem Prinzip eines Wagenhebers zu unterstützen. Das Vorsehen eines zusätzlichen und mit einem Antrieb versehenen Stützelements kann neben der Bereitstellung einer zusätzlichen Abstützung der Plattformeinheit ermöglichen, auch eine mit zusätzlichem Gewicht beschwerte Plattformeinheit in ihrer Höhe bezüglich eines Bodenelements des Fahrzeuginnenraums ohne weiteres variieren zu können.

Das mindestens eine Plattformelement kann grundsätzlich schwenkbar und/oder translatorisch verstellbar sein, insbesondere um und entlang unterschiedlicher Raumachsen. Beispielsweise ist das mindestens eine Plattformelement um eine Schwenkachse schwenkbar, die parallel zu einer von einem Fahrzeugheck zu einer Fahrzeugfront weisenden Fahrzeuglängsrichtung des Fahrzeugs verläuft oder die senkrecht zu der Fahrzeuglängsrichtung (und damit parallel zu einer Fahrzeugquerachse) verläuft.

Um an der Plattformeinheit eine größere Tritt- und/oder Ladefläche zur Verfügung zu stellen, kann die Plattformeinheit zusätzlich zu dem mindestens einen Plattformelement durch mindestens ein flächiges Zusatzelement gebildet sein. Ein solches flächiges Zusatzelement ist dann beispielsweise an dem mindestens einen Plattformelement schwenkbar und/oder translatorisch verstellbar gelagert. So kann dann beispielsweise das Zusatzelement noch in einem eingeklappten oder eingefahrenen Zustand mit dem Plattformelement aus einer ersten Verstellpositionen in eine zweite Verstellposition verstellt werden, insbesondere fremdkraftbetätigt. Anschließend erfolgt eine Verstellung des flächigen Zusatzelements bezüglich des in der zweiten Verstellposition verbleibenden Plattformelements, um eine vergrößerte Tritt- und/oder Ladefläche für die Plattformeinheit zur Verfügung zu stellen. Selbstverständlich ist auch eine Ausführungsvariante möglich, bei der zunächst das Zusatzelement bezüglich des Plattformelements verstellt wird oder eine Verstellung beider Elemente zumindest zeitweise gleichzeitig erfolgt.

Das mindestens eine flächige Zusatzelement ist in einer Ausführungsvariante beispielsweise um eine weitere Schwenkachse schwenkbar, die parallel oder senkrecht zu derjenigen Schwenkachse verläuft, um die das mindestens eine Plattformelement schwenkbar ist. Für die Bereitstellung einer Tritt- und/oder Ladefläche an der in der Gebrauchslage vorliegenden Plattformeinheit werden beispielsweise das Plattformelement und das Zusatzelement (gegebenenfalls auch weitere Plattform- und/oder Zusatzelemente) an dem Fahrzeug und hierbei gegebenenfalls insbesondere an der mindestens einen Tür auf- und/oder umgeklappt und/oder ausgefahren. Um anschließend die Plattformeinheit wieder kompakt an dem Fahrzeug zu verstauen, erfolgt eine Verstellbewegung der einzelnen Elemente in umgekehrter Richtung und/oder Reihenfolge.

In einer Ausführungsvariante ist die Plattformeinheit in ihrer Gebrauchslage mit einem hinteren Bereich einer Einstiegskante respektive einer Vorderkante eines an einen Innenraum des Fahrzeugs vorgesehenen und eine Karosserieöffnung angrenzenden Bodenelements zugewandt. Ferner ist wenigstens ein Halteelement vorgesehen, über das ein vorderer Bereich der Plattformeinheit, der zu dem hinteren Bereich in einer von der Vorderkante weg weisenden Raumrichtung beabstandet ist, mit der mindestens einen Tür oder einer die Karosserieöffnung berandenden Rahmenstruktur des Fahrzeugs verbunden ist. Der vordere Bereich der Plattformeinheit wird hier folglich durch wenigstens ein zusätzliches Halteelement stabilisiert, das eine (zusätzliche) Verbindung zu der Tür oder einer Rahmenstruktur des Fahrzeugs bereitstellt und damit etwaige Gewichtskräfte hierüber in die Tür oder die Rahmenstruktur des Fahrzeugs einleiten kann. Beispielsweise ist das Halteelement derart dann zur Aufnahme von Zugkräften ausgebildet und umfasst beispielsweise mindestens ein Band, mindestens eine Kette, mindestens ein Seil und/oder mindestens eine Stange.

In einer Weiterbildung ist ein Abschnitt eines Halteelements an einem federnd gelagerten, rahmenseitigen oder türseitigen Verbindungsteil gehalten. Eine elastische Verlagerbarkeit des Halteelements bezüglich der fahrzeugseitigen Rahmenstruktur respektive bezüglich eines Teils der Tür ist hier somit gezielt zugelassen, insbesondere um die Verstellbarkeit der Plattformeinheit zu unterstützen. Ist ein Zusatzelemente zur Bildung der Plattformeinheit in der Gebrauchslage vorgesehen, kann das wenigstens ein Halteelement in dem vorderen Bereich der Plattformeinheit mit einem solchen Zusatzelement verbunden sein. Alternativ kann das wenigstens eine Halteelement in dem vorderen Bereich der in der Gebrauchslage vorliegenden Plattformeinheit mit dem mindestens eine Plattformelement verbunden sein.

Ein stabilisierend wirkendes Halteelement kann in einer Ausführungsvariante alternativ oder ergänzend für eine Veränderung einer Position der in der Gebrauchslage vorliegenden Plattformeinheit verstellbar ausgeführt sein. Hierfür ist beispielsweise ein Ende des Halteelements an der Plattformeinheit angelenkt, während ein anderes Ende des - dann typischerweise längserstreckten - Halteelements an einer rahmenseitigen Führungseinrichtung einer Rahmenstruktur der Karosserieöffnung oder einer türseitigen Führungseinrichtung verschieblich gelagert ist. Mit einem Verschieben des an der Führungseinrichtung geführten Endes ist dann eine Verlagerung der Plattformeinheit steuerbar.

Grundsätzlich kann das mindestens eine Plattformelement als Teil der Tür oder festgelegt an der Tür mit verlagerbar sein, wenn die Tür aus ihrer Schließposition in ihre Öffnungsposition verstellt wird. Ein Mitverlagern des mindestens einen Plattformelements kann hierbei stets bei einer Verstellung der Tür erfolgen. In einer Ausführungsvariante ist eine eventuelle Mitverlagerung des mindestens einen Plattformelements von einem Kopplungszustand respektive einem Verstellmodus von mehreren (mindestens zwei) möglichen Verstellmodi für die Tür abhängig. So kann dann in letzterem Fall das mindestens eine Plattformelement wahlweise mit einem Türblattelement der Tür oder hierzu separat verstellbar sein.

In einer Ausführungsvariante ist die Karosserieöffnung durch wenigstens zwei Türen verschließbar. So können an der Karosserieöffnung beispielsweise zwei gegenläufig verschwenkbare oder zwei gegenläufig verschiebbare Türen vorgesehen sein. Jeder der mindestens zwei Türen kann eines von wenigstens zwei Plattformelementen zugeordnet sein, die dann jeweils Teil der Plattformeinheit sind (wenn die Plattformelemente entsprechend verstellt wurden, um eine gestückelte oder zusammenhängende Tritt- und/oder Ladefläche für die Gebrauchslage der Plattformeinheit zu definieren).

Das in der Schließposition der mindestens einen Tür zumindest einen Teil der Karosserieöffnung verschließende Plattformelement ist separat von mindestens einem flächigen Türblattelement der Tür verstellbar, das in der Schließposition zusammen mit dem Plattformelement zumindest einen Teil der Karosserieöffnung verschließt. Die Tür ist hier folglich mehrteilig ausgebildet und umfasst neben dem flächigen Plattformelement noch ein flächiges Türblattelement. Beide Elemente der Tür (Türblattelement und Plattformelement) verschließen gemeinsam in der Schließposition der Tür die Karosserieöffnung zumindest teilweise und definieren jeweils einen Teil einer Türaußenhaut an der Karosserie des Fahrzeugs.

In einer hierauf basierenden Ausführungsvariante ist das Türblattelement dann, bezogen auf eine von einem Fahrzeugboden zu einem Fahrzeugdach des Fahrzeug weisenden Fahrzeughochrichtung, als oberer Teil der mindestens einen Tür vorgesehen, während das Plattformelement einen unteren Teil der mindestens einen Tür bildet. Für eine Bereitstellung der Plattformeinheit kann dann das mindestens eine Plattformelement mit wenigstens einer Richtungskomponente bezüglich der Fahrzeugvorrichtung nach unten verstellbar sein, während das Türblattelement separat hiervon nach oben oder, quer zur Fahrzeughochrichtung, seitwärts an dem Fahrzeug verstellbar ist. Das Türblattelement wird somit zur Freigabe der Karosserieöffnung nach oben oder parallel zu einer Fahrzeuglängsrichtung seitwärts verstellt (gegebenenfalls überlagert mit einer oder mehreren Schwenkbewegungen). Mit einer entsprechenden Verstellbewegung des Türblattelements geht eine Verstellung des mindestens einen Plattformelements bezüglich der Fahrzeugvorrichtung nach unten einher, um eine Tritt- und/oder Ladefläche der Plattformeinheit zu definieren.

Insbesondere in einer vorstehend erläuterten Ausführungsvariante kann das Plattformelement in eine Stauraumposition verstellbar sein, in der das Plattformelement zumindest teilweise unterhalb eines fahrzeugseitigen Bodenelements vorliegt, das eine Bodenfläche eines Innenraums des Fahrzeugs definiert. Das mindestens eine Plattformelement kann dementsprechend in der Stauraumposition zumindest teilweise zwischen einem Untergrund oder einer Fahrbahn und einem Fahrzeugunterboden des Fahrzeugs vorliegen oder in einem bodenseitigen Stauraum unterhalb der Bodenfläche.

Ein Türblattelement der mindestens einen Tür kann um wenigstens eine Schwenkachse schwenkbar sein, um die Karosserieöffnung wenigstens teilweise freizugeben. Dies schließt insbesondere ein Verschwenken des Türblattelements über einen Rand eines Fahrzeugs hinweg ein.

In einer Ausführungsvariante kann das mindestens eine Plattformelement in einem Verstellmodus (von wenigstens zwei möglichen Verstellmodi) auch mit einem Türblattelement gekoppelt schwenkbar sein, um die Karosserieöffnung wenigstens teilweise freizugeben. Das Plattformelement und das Türblattelement sind hierbei dann folglich miteinander gekoppelt in einem ersten Verstellmodus verlagerbar, um eine Öffnungsposition der Tür vorzugeben, in der der Fahrzeuginnenraum zugänglich ist, ohne dass über das Plattformelement eine Einstiegs- und/oder Ausstiegshilfe an der Karosserieöffnung bereitgestellt würde. In einem zweiten Verstellmodus ist das mindestens eine Plattformelement demgegenüber von dem Türblattelement entkoppelt und kann separat hiervon zur Bereitstellung der Einstiegs- und/oder Ausstiegshilfe verlagert werden.

Gemäß einem Beispiel kann das mindestens eine Plattformelement
b1) in der Schließposition der mindestens einen Tür in einer ersten Verstellposition einer Komponente der mindestens einen Tür festgelegt und aus der ersten Verstellposition in eine zweite Verstellposition verstellbar, um hierüber eine Tritt- und/oder Ladefläche der Plattformeinheit zur Verfügung zu stellen, oder
b2) in der Öffnungsposition der mindestens einen Tür an einer Führungseinrichtung einer Komponente der mindestens einen Tür (körperlich) geführt und hieran abgestützt verstellbar.

In jeder dieser Varianten kann das Plattformelement über eine an der Tür vorgesehene Führungseinrichtung verstellbar sein, wenn die Tür in ihrer Öffnungsposition vorliegt. Über eine derartige Verstellung kann beispielsweise die Plattformeinheit respektive eine mit ihr zur Verfügung gestellte Tritt- und/oder Ladefläche in ihrer Position, insbesondere in ihrer Höhe bezüglich einer Einstiegskante und/oder ihrer Neigung, eingestellt werden, insbesondere elektronisch gesteuert mithilfe wenigstens eines Antriebsmotors. Dies schließt insbesondere ein, dass das Plattformelement über die Führungseinrichtung entlang einer Fahrzeughochrichtung verstellbar ist, um mit der Plattformeinheit eine Hebevorrichtung nach Art einer Hebebühne an der Karosserieöffnung bereitzustellen. An der Führungseinrichtung kann beispielsweise wenigstens eine drehbare Antriebsspindel vorgesehen sein, die für eine fremdkraftbetätigte Verstellung der Plattformeinheit über mindestens einen Antriebsmotor drehbar ist.

In einem anderen Beispiel ist das Plattformelement quer zu einer von einem Fahrzeugheck zu einer Fahrzeugfront weisenden Fahrzeuglängsrichtung des Fahrzeugs aus einem fahrzeugseitigen Stauraum ausfahrbar. Über wenigstens eine Führungseinrichtung an der in der Öffnungsposition vorliegenden Tür ist dann das Plattformelement abstützbar, wenn das Plattformelement quer zu der Fahrzeuglängsrichtung aus dem fahrzeugseitigen Stauraum ausgefahren wird. Das Plattformelement kann folglich in einer derartigen Ausführungsvariante an einer Einstiegskante der Karosserieöffnung translatorisch (gegebenenfalls überlagert mit einer Schwenkbewegung) nach außen ausgefahren werden, wobei das ausfahrende Plattformelement an der in einer Öffnungsposition vorliegenden Tür eine körperliche Abstützung und Führung erfährt und damit auch das ausgefahrene Plattformelement durch die Tür stabilisiert ist.

In einem weiteren Beispiel ist das Plattformelement demgegenüber parallel zu einer von einem Fahrzeugheck zu einer Fahrzeugfront weisenden Fahrzeuglängsrichtung des Fahrzeugs aus einem türseitigen Stauraum ausführbar. Über wenigstens eine Führungseinrichtung an der in der Öffnungsposition vorliegenden Tür ist das Plattformelement hier abstützbar, wenn das Plattformelement parallel zu der Fahrzeuglängsrichtung aus dem türseitigen Stauraum ausgefahren wird. Beispielsweise ist hierbei die Führungseinrichtung mit einem ausklappbaren oder ausfahrbaren Führungsarm ausgebildet, der einen Führungsschiene für das Plattformelement integriert. In einer Weiterbildung dieses Beispiels ist das Plattformelement mehrteilig mit mehreren Segmenten ausgeführt, die in einem ausgefahrenen Zustand parallel zur Fahrzeuglängsrichtung hintereinander liegen, um eine zusammenhängende Tritt- und/oder Ladefläche der Plattformeinheit zu definieren. In einem eingefahrenen Zustand liegen die mehreren Segmente innerhalb des türseitigen Stauraums platzsparend übereinander vor.

Ein Beispiel sieht bei Verwendung mindestens zweier Türen zum Verschließen der Karosserieöffnungen vor, dass an einer ersten Tür der wenigstens zwei Türen ein erstes Plattformelement festgelegt ist und an einer zweiten Tür der wenigstens zwei Türen ein zweites Plattformelement festgelegt ist. Die ersten und zweiten Plattformelemente sind hierbei jeweils aus einer jeweiligen ersten Verstellposition in eine zweite Verstellposition verstellbar, in der die ersten und zweiten Plattformelemente zur Bildung der Plattformeinheit miteinander gekoppelt sind. Die ersten und zweiten Plattformelemente definieren somit in der zweiten Verstellposition nicht nur eine vorzugsweise zusammenhängende Tritt- und/oder Ladefläche für eine Gebrauchslage der Plattformeinheit, sondern sind auch mechanisch miteinander verbunden, um die Stabilität der in der Gebrauchslage vorliegenden Plattformeinheit zu erhöhen. Insbesondere können die ersten und zweiten Plattformelemente hierbei zur Bildung der Plattformeinheit miteinander verriegelbar sein, beispielsweise über ineinandergreifende Verriegelungsgestänge.

Beispielsweise sind die ersten und zweiten Plattformelemente zur Bildung der Plattformeinheit von den zwei zugeordneten Türen aufeinander zu schwenkbar, wenn sich die zwei Türen jeweils in der jeweiligen Öffnungsposition befinden. In einer Weiterbildung sind die aufeinander zu geschwenkten und untereinander gekoppelten Plattformelemente noch höhenverstellbar, sodass eine mit den beiden Plattformelementen gebildete Plattformeinheit respektive ihre Tritt- und/oder Ladefläche vor der Karosserieöffnung in ihrer Höhe variierbar ist. Bei einer derartigen Variante kann über einander gegenüberliegende Türblattelemente der ausgeschwenkten Türen, relativ zu denen die Plattformeinheit in ihrer Höhe einstellbar ist, auch ein Sichtschutz und Kollisionsschutz für über die Plattformeinheit einsteigende oder aussteigende Personen gegeben sein.

In einem Beispiel mit zwei Türen für das zumindest teilweise Verschließen der Karosserieöffnung, kann an einer ersten Tür das Plattformelement schwenkbar gelagert sein, während an der zweiten Tür kein Plattformelement vorgesehen ist. Die zweite Tür ohne Plattformelement kann hierbei aber wenigstens der Abstützung der Plattformeinheit dienen und/oder der Verstellbarkeit der Plattformeinheit. So ist beispielsweise an der Tür ohne Plattformelement wenigstens ein fremdkraftbetätigt verstellbares Verstellelement vorgesehen, über das die Plattformeinheit entlang der Fahrzeughochrichtung verstellbar ist. Beispielsweise kann unterhalb der Einstiegskante der Karosserieöffnung ein vorstehendes, längserstrecktes Stützelement vorgesehen sein, an dem die Plattformeinheit in ihrer Gebrauchslage aufliegt. Dieses Stützelement kann nun über wenigstens ein fremdkraftbetätigt verstellbares Verstellelement der Tür verstellbar sein, unabhängig davon, ob an der Tür ein Plattformelement schwenkbar gelagert ist oder nicht.

Ein weiteres Beispiel betrifft ein Fahrzeug, bei dem wenigstens ein Teil einer flächigen Plattformeinheit durch mindestens ein verstellbares, flächiges Plattformelement gebildet ist, das, bezogen auf eine von einem Fahrzeugboden zu einem Fahrzeugdach des Fahrzeugs weisende Fahrzeughochrichtung, in eine Verstellposition oberhalb der Vorderkante eines im Fahrzeuginnenraum vorhandenen und an die Karosserieöffnung angrenzenden Bodenelements verstellbar ist.

Gemäß diesem Beispiel ist folglich die Plattformeinheit mit dem mindestens einen Plattformelement nach oben über eine Einstiegskante hinaus an der Karosserieöffnung verstellbar. Dies schließt insbesondere ein, dass die Plattformeinheit über ein unteres Drittel oder bis zu einer Hälfte der Höhe der Karosserieöffnung entlang der Fahrzeughochrichtung über die Einstiegskante hinaus nach oben verstellt werden kann. Dies ist insbesondere mit Blick auf die Bereitstellung einer Drohnenlandesfläche und/oder einer Übergabeplattform durch die Plattformeinheit von Vorteil.

Die beigefügten Ausführungsbeispiele zeigen mögliche Varianten der vorgeschlagenen Lösung. Hierbei können Aspekte der einzelnen Varianten auch untereinander kombinierbar sein.

Hierbei zeigen:
- Figuren 1A bis 1C: eine erste Ausführungsvariante eines vorgeschlagenen Fahrzeugs mit einer einzelnen, mehrteiligen Tür, bei der ein unterer Türteil durch ein flächiges Plattformelement zur Bereitstellung einer Plattformeinheit an einer Karosserieöffnung gebildet ist;
- Figuren 2A-2F: eine weitere Ausführungsvariante eines vorgeschlagenen Fahrzeugs mit einer mehrteiligen Tür mit dem Plattformelement in unterschiedlichen Verstellpositionen;
- Figuren 3A-3D: eine Weiterbildung der Ausführungsvariante der Figuren 2A bis 2F, mit einem segmentierten Dachteil und einem zusätzlich an dem Plattformelement ausfahrbaren Zusatzelement;
- Figur 4: das Fahrzeug der Figuren 2A bis 2F in geschnittener Darstellung;
- Figur 4A: eine vergrößerte Detaildarstellung des mit "A" bezeichneten Bereichs der Figur 4;
- Figur 5: eine teilweise geschnittene Seitenansicht des Fahrzeugs;
- Figur 5A: eine vergrößerte Detaildarstellung des mit "A" bezeichneten Bereichs der Figur 5;
- Figuren 6A-6G: verschiedene Ansichten von unterschiedlichen Verstellpositionen eines Plattformelements und eines Türblattelements bei einer weiteren Ausführungsvariante eines vorgeschlagenen Fahrzeugs, bei dem an einem ausfahrbaren Zusatzelement einer Plattformeinheit ein Stützelement mit einem Kniehebelmechanismus vorgesehen ist;
- Figuren 7A-7D: eine Ausführungsvariante eines vorgeschlagenen Fahrzeugs unter Veranschaulichung verschiedener Phasen beim Öffnen zweier Türflügel einer Doppeltür;
- Figuren 8A-8D: in mit den Figuren 7A bis 7D übereinstimmenden Ansichten eine mögliche Weiterbildung, bei der für eine Öffnungsbewegung der Türen der Doppeltür eine zusätzliche Schwenkbewegung vorgesehen ist;
- Figuren 9A-9C: eine Weiterbildung eines Fahrzeugs gemäß der Variante der Figuren 7A bis 7D oder 8A bis 8D, bei der durch Türblattelemente der Türen jeweils Halteelemente für eine ausgeklappte Plattformeinheit gebildet sind;
- Figuren 10A-10C: eine Weiterbildung auf Basis der Ausführungsvariante der Figuren 7A bis 7D und 8A bis 8D, bei der von den Türblattelementen separate Halteelemente für die Plattformeinheit vorgesehen sind;
- Figuren 11A-11D: eine weitere Variante unter Veranschaulichung ausklappbarer Zusatzelemente für eine Vergrößerung einer Tritt- und/oder Ladefläche einer in der Gebrauchslage vorliegenden Plattformeinheit;
- Figuren 12A-12D: eine weitere Ausführungsvariante eines vorgeschlagenen Fahrzeugs, bei dem an zwei gegenläufig aufschwenkbaren Türen des Fahrzeugs jeweils ein Plattformelement für die Bildung einer Plattformeinheit vorgesehen ist, die in einer Gebrauchslage der Plattformeinheit miteinander verriegelt und höhenverstellbar sind;
- Figur 13A-13B: die Ausführungsvariante der Figuren 12A bis 12D mit der Plattformeinheit in einer verkippten Position, sodass hierüber eine Rampe für einen erleichterten Einstieg in und einen erleichterten Ausstieg aus dem Fahrzeug definiert ist;
- Figuren 14A-14E: eine weitere Ausführungsvariante basierend auf der Variante der Figuren 12A bis 12D, bei der an der Plattformeinheit zusätzliche Stützelemente vorgesehen sind;
- Figur 15: in Seitenansicht eine Tür der Ausführungsvariante der Figuren 14A bis 14E;
- Figuren 16A-16E: eine weitere Ausführungsvariante basierend auf der Variante der Figuren 12A bis 12D, bei der die in der Gebrauchslage vorliegende Plattformeinheit mit zusätzlichen Halteelementen in Form von Stangen an türseitigen Führungseinrichtungen gehalten ist;
- Figuren 17A-17E: in mit den Figuren 16A bis 16E übereinstimmenden Ansichten eine Variante, bei der anstelle der Stangen flexible Halteelemente, zum Beispiel jeweils in Form eines Seils, einer Kette oder eines Bandes, verwendet sind;
- Figur 18: ausschnittsweise und in Seitenansicht eine Tür der Ausführungsvariante der Figuren 17A bis 17E;
- Figuren 19A-19F: eine weitere Ausführungsvariante mit seitlich ausklappbaren Plattformelementen an zwei zueinander gegenläufig aufschwenkbaren Türen;
- Figuren 20A-20F: in mit den Figuren 19A bis 19F übereinstimmenden Ansichten eine weitere Variante mit einer abweichend aufklappbaren Plattformeinheit;
- Figuren 21A-21F: eine weitere Ausführungsvariante eines vorgeschlagenen Fahrzeugs, bei dem lediglich an einer von zwei Türen zum Verschließen einer Karosserieöffnung ein ausklappbares Plattformelement vorgesehen ist;
- Figuren 22A-22E: eine weitere Ausführungsvariante eines vorgeschlagenen Fahrzeugs, bei dem ein Plattformelement einer Plattformeinheit im Bereich eines Fahrzeugbodens ausfahrbar ist und des Weiteren sowohl während des Ausfahrens als auch in einem ausgefahrenen Zustand türseitig abgestützt und in einem ausgefahrenen Zustand höhenverstellbar und verkippbar ist;
- Figuren 22F-22H: verschiedene Ansichten zu Details der Ausführungsvariante der Figuren 22A bis 22E;
- Figuren 23A-23B: ausschnittsweise eine weitere Ausführungsvariante eines vorgeschlagenen Fahrzeugs, bei der eine ausfahrbare Plattformeinheit durch ein segmentiertes Plattformelement gebildet ist, das an einer aufschwenkbaren Tür verstaubar ist.

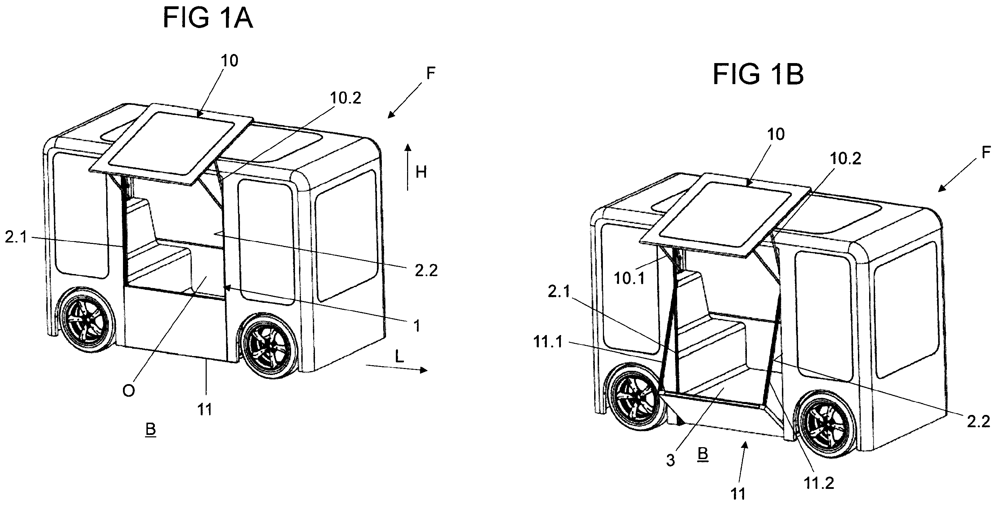

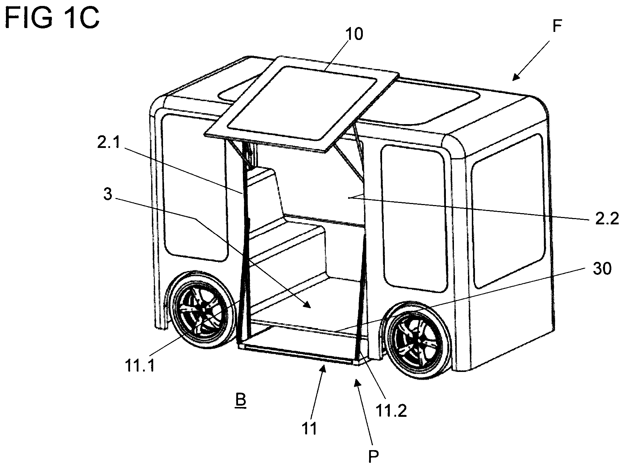

Die Figuren 1A bis 1C veranschaulichen eine erste Ausführungsvariante eines vorgeschlagenen Fahrzeugs F, das hier als Straßenfahrzeug, insbesondere als autonom fahrendes Straßenfahrzeug ausgebildet ist. Das Fahrzeug F verfügt über eine Karosserieöffnung O, die durch eine Fahrzeugtür 1 verschließbar ist, die vorliegend zweiteilig ausgebildet ist. Ein oberer Teil der Tür 1 ist durch ein Türblattelement 10 gebildet, das zum Öffnen der Fahrzeugtür 1 nach oben über einen Dachrand eines Fahrzeugdaches des Fahrzeugs F hinweggeklappt werden kann. Ein unterer Teil der Tür 1 ist durch ein flächiges Plattformelement 11 gebildet. Dieses Plattformelement 11 bildet bei verschlossener Tür 1 einen Teil einer Türaußenhaut an dem Fahrzeug F. Ferner kann das Plattformelement 11 separiert von dem Türelement 10, bezogen auf eine Fahrzeughochrichtung H, nach unten abgeklappt werden, um eine Plattformeinheit P mit einer Tritt- und/oder Ladefläche für einen erleichterten Fahrzeugzugang zur Verfügung zu stellen.

Das flächige Plattformelement 11 ist dabei über längserstreckte Halteelemente 11.1 und 11.2, beispielsweise in Form von Stangen, an türrahmenseitigen Führungsschienen 2.1 und 2.2 an der Karosserie des Fahrzeugs F verstellbar gehalten. Die Führungsschienen 2.1 und 2.2 sind jeweils Teil einer seitlichen Rahmenstruktur, die die Karosserieöffnung O berandet. An den Führungsschienen 2.1 und 2.2 sind beispielsweise motorisch in Drehung versetzbare Antriebsspindeln vorgesehen, um das Plattformelement 11 nach unten und das Türblattelement 10 nach oben zu verschwenken, wenn die Karosserieöffnung O zugänglich gemacht werden soll.

In einer abgesenkten Lage der Plattformeinheit 11, in der eine Gebrauchslage der Plattformeinheit P definiert ist, liegt die hiermit definierte Tritt- und/oder Ladefläche angrenzend zu einer Vorderkante 30 eines im Fahrzeuginnenraum vorgesehenen Bodenelements 3 vor und damit angrenzend an eine Einstiegskante der Karosserieöffnung O. Über das derart in Richtung eines Untergrunds B abgesenkte Plattformelement 11 kann der Einstieg für eine Person in das Fahrzeug F respektive umgekehrt der Ausstieg einer Person aus dem Fahrzeug F erleichtert werden.

Für die Verstellung des Türblattelements 10 nach oben und respektive nach unten (für ein Schließen der Tür 1) ist das Türblattelement 10 mit Führungselementen 10.1 und 10.2, beispielsweise in Form von Gestängen, verbunden, die ebenfalls an den Führungsschienen 2.1 und 2.2 der seitlichen Rahmenstrukturen fremdkraftbetätigt verschieblich gehalten sind.

Das Plattformelement 11 ist bei der Ausführungsvariante der Figuren 1A bis 1C vorliegend nicht nur aus einer Schließposition der Tür 1 nach unten abklappbar, sondern zusätzlich auch unterhalb des Bodenelements 3 zumindest teilweise einfahrbar, um an der Karosserieöffnung O einen spaltfreien Übergang zwischen der über die Plattformeinheit P in ihrer Gebrauchslage bereitgestellte Tritt- und/oder Ladefläche und die durch die Vorderkante 30 des Bodenelements 3 definierte Einstiegskante bereitzustellen. Zudem kann durch das teilweise Einfahren des Plattformelements 11 unter das Bodenelement 3 die Größe der zur Verfügung gestellten Tritt- und/oder Ladefläche auch auf eine Größe beschränkt werden, die kleiner ist als eine Seitenfläche des Plattformelements 11, die bei geschlossener Tür 1 dem Fahrzeuginnenraum zugewandt ist.

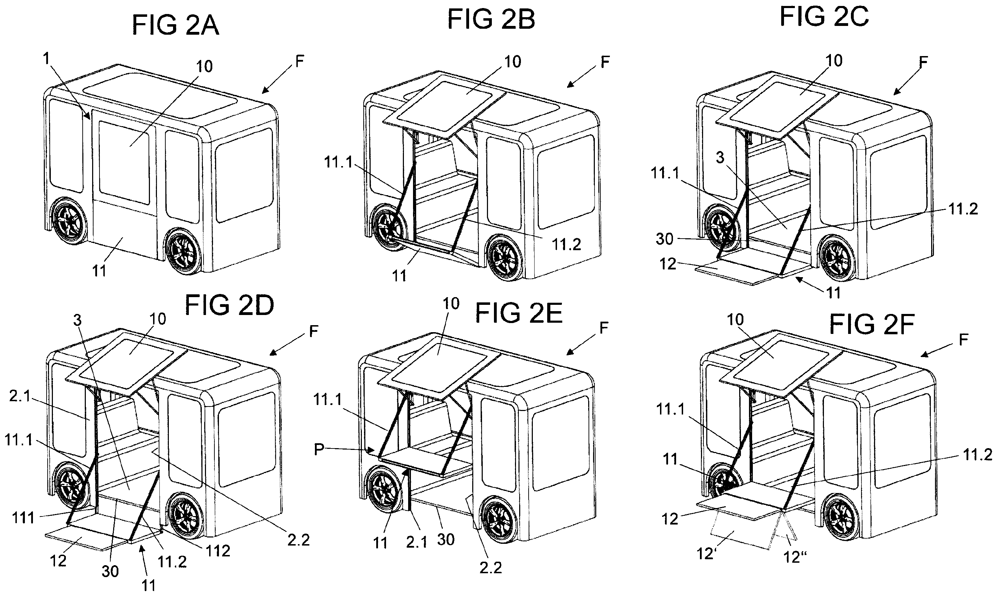

Entsprechend der Weiterbildung der Figuren 2A bis 2F kann das flächige Plattformelement 11 auch in seiner Höhe bezüglich der Vorderkante 30 und damit der Einstiegskante der Karosserieöffnung O nach dem Aufklappen höhenverstellbar sein. Hierfür ist das Plattformelement 11 an seinem hinteren Bereich über Verstellschieber 111 und 112 an den einander gegenüberliegenden Führungsschienen 2.1 und 2.2 der seitlichen Rahmenstrukturen der Karosserieöffnung O entlang der Fahrzeughochrichtung H verschieblich gelagert. Derart kann das Plattformelement 11 und die hiermit definierte Plattformeinheit P mit der horizontalen Tritt- und/oder Ladefläche in ihrer Höhe bezüglich der Einstiegskante der Karosserieöffnung O verstellt werden. Vorliegend kann die Plattformeinheit P hierbei auch deutlich oberhalb der Einstiegskante positioniert werden, um derart eine Drohnenlandefläche und/oder eine Übergabeplattform für das Einladen oder Ausladen von Objekten in oder aus dem Fahrzeuginnenraum bereitzustellen. Hierfür können sich die Führungsschienen 2.1 und 2.2. über einen Großteil der Gesamthöhe der Karosserieöffnung O erstrecken.

Bei der Ausführungsvariante der Figuren 2A bis 2F ist an dem flächigen Plattformelement 11 des Weiteren ein flächiges Zusatzelement 12 translatorisch verstellbar gelagert. Dieses Zusatzelement 12 kann an dem Plattformelement 11 ausgefahren werden, um die in der Gebrauchslage der Plattformeinheit P zur Verfügung gestellte Tritt- und/oder Ladefläche zu vergrößern.

Wie anhand der Figur 2F veranschaulicht ist, kann in einer alternativen Ausführung das Zusatzelement 12 auch an dem Plattformelement 11 ausklappbar vorgesehen sein. Das Zusatzelement 12 ist dann beispielsweise über mit 12' und 12" in der Figur 2F bezeichnete Verstellpositionen hinweg in eine ausgeklappte Stellung zur Vergrößerung der Tritt- und/oder Ladefläche klappbar.

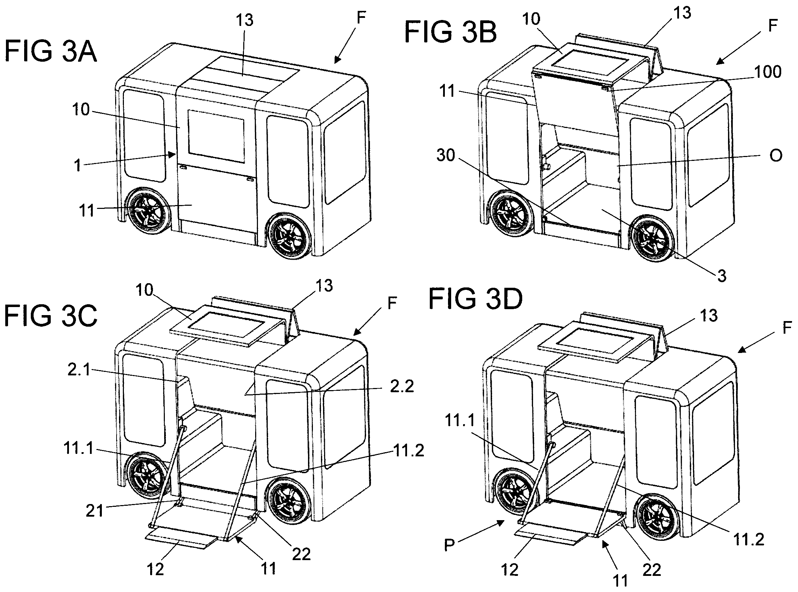

Bei der Ausführungsvariante der Figuren 3A bis 3D weist das flächige Plattformelement 11 erneut ein bedarfsweise zusätzlich ausfahrbares flächiges Zusatzelement 12 an seiner Vorderkante auf. Darüber hinaus ist für eine Stabilisierung der Plattformeinheit P in einer mit der Einstiegskante gegebenenfalls flächenbündig abschließenden Gebrauchslage sowie eine Absenkbarkeit der Plattformeinheit P in Richtung des Untergrunds B eine Gelenkhebelanordnung mit Gelenkhebel 21 und 22 vorgesehen. Über die Gelenkhebel 21 und 22 ist das flächige Plattformelement 11 der Plattformeinheit P in einem hinteren Bereich an den Führungsschienen 2.1 und 2.2 gehalten. In einem vorderen Bereich erfolgt eine Stabilisierung der horizontalen Gebrauchslage der Plattformeinheit P erneut über an den Führungsschienen 2.1 und 2.2 verschieblich gehaltene Halteelemente 11.1 und 11.2, vorliegend gebildet durch zwei an dem Plattformelement 11 angelenkte (Verbindungs-) Stangen.

In Abweichung von den zuvor erläuterten Ausführungsvarianten ist bei der Ausführungsvariante der Figuren 3A bis 3D zudem das Türblattelement 10 an einem segmentierten Dachteil 13 des Fahrzeugs F angelenkt. Derart kann das Türblattelement 10 nicht nur um eine parallel zu einer Fahrzeuglängsrichtung L verlaufende Schwenkachse geschwenkt werden, um die Karosserieöffnung O freizugeben. Zusätzlich sind vielmehr auch Segmente des Dachteils 13 schwenk- und klappbar, um bei der Türöffnung und damit Freigabe der Karosserieöffnung O nach oben hin zusätzlichen Platz zu schaffen.

Ferner ist das Plattformelement 11 je nach gewähltem Verstellmodus der Tür 1 entweder zusammen mit dem Türblattelement 10 nach oben hin verstellbar, ohne dass folglich eine Plattformeinheit P als ein Einstiegs- respektive Ausstiegshilfe bereitgestellt wird, oder an einer Kopplungsschnittstelle 100 von dem Türblattelement 10 getrennt verstellbar. In letzterem Fall kann somit das Plattformelement 11 nach unten von dem Türblattelement 10 separiert verstellt werden, um die Tritt- und/oder Ladefläche vor der Einstiegskante der Karosserieöffnung O zur Verfügung zu stellen.

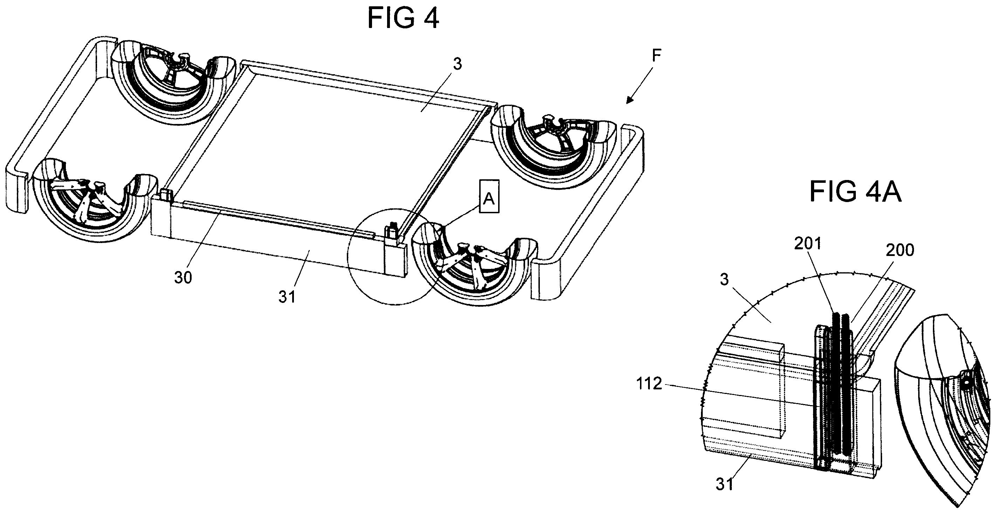

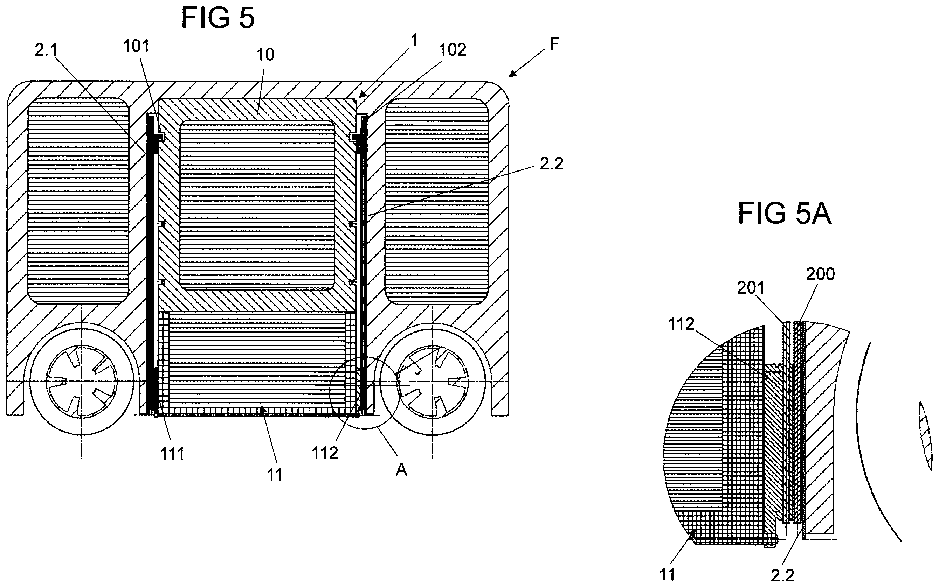

Die Figuren 4 und 4A veranschaulichen unterschiedliche Ansichten eines Aufbaus eines Verstellmechanismus für die Verstellung des Plattformelements 11 sowie des Türblattelements 12, der z.B. bei den Ausführungsvarianten der Figuren 1A bis 1C und 2A bis 2F Anwendung finden kann. Weitere Details zeigen hierbei die Figuren 5 und 5A.

So ist hier an den seitlichen Führungsschienen 2.1 und 2.2 der seitlichen Rahmenstrukturen jeweils eine Antriebsvorrichtung mit Antriebselementen in Form von Antriebsspindel 200 und 201 vorgesehen. Eine Antriebsspindel 200 übernimmt hierbei zusammen mit einem mit der Antriebsspindel 200 kämmenden und an der jeweiligen Führungseinrichtung 2.1 oder 2.2 längsverschieblich gelagerten Verstellelement in Form eines Verstellschiebers 101 oder 102 die Verstellung des Türblattelements 10. Über eine weitere Antriebsspindel 201 und einen hiermit jeweils an der jeweiligen Führungsschiene 2.1 oder 2.2 kämmenden Verstellschieber 111 oder 112 erfolgt die fremdkraftbetätigte und elektronisch steuerbare Verstellung des Plattformelements 11.

Die beidseitig an der seitlichen Rahmenstruktur der Karosserieöffnung O vorgesehenen Verstellschieber 111, 112 des Plattformelements 11 sind hierbei insbesondere auch bis unter die bodenelementseitige Vorderkante 30 und damit die Einstiegskante der Karosserieöffnung O in einer Blende 31 verschieblich. Derart kann das Plattformelement 11 auch im ausgeklappten Zustand (und damit die Plattformeinheit P in ihrer Gebrauchslage) in ihrer Höhe mithilfe der Antriebsspindel 201 in ihrer Höhe eingestellt und unterhalb die Einstiegskante verstellt werden.

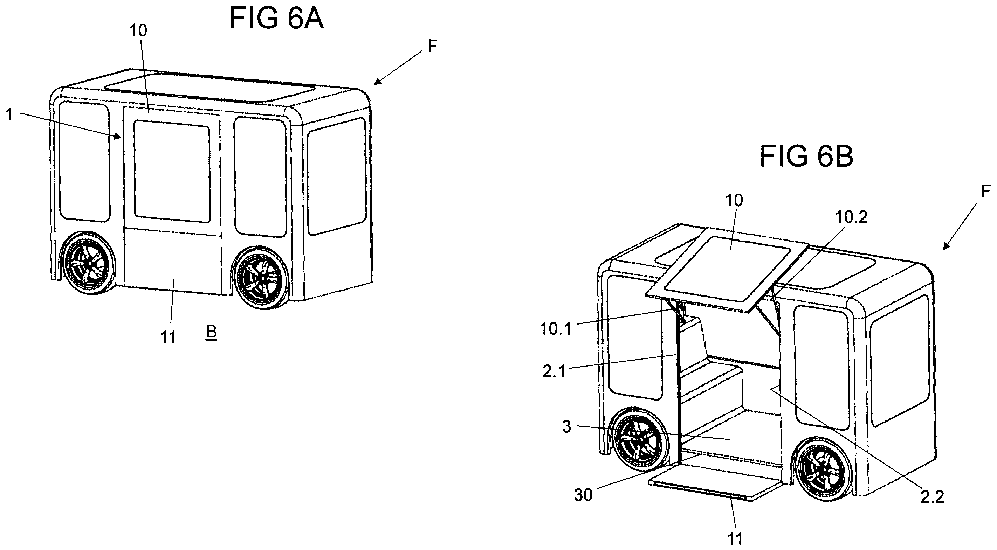

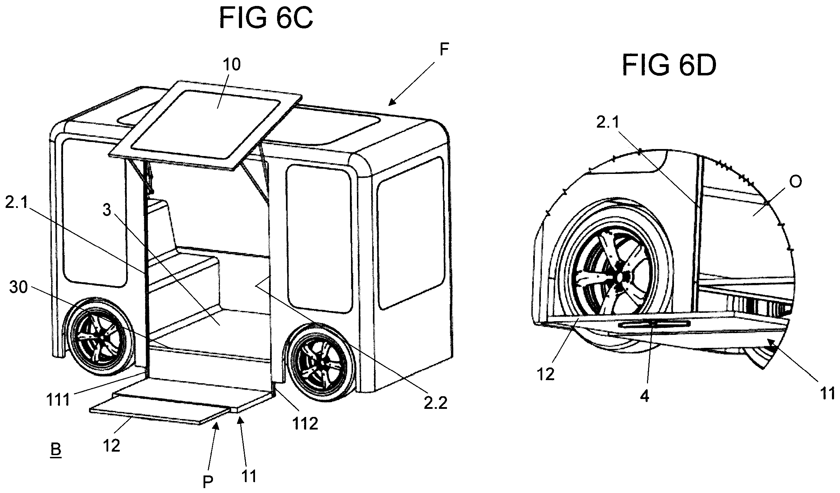

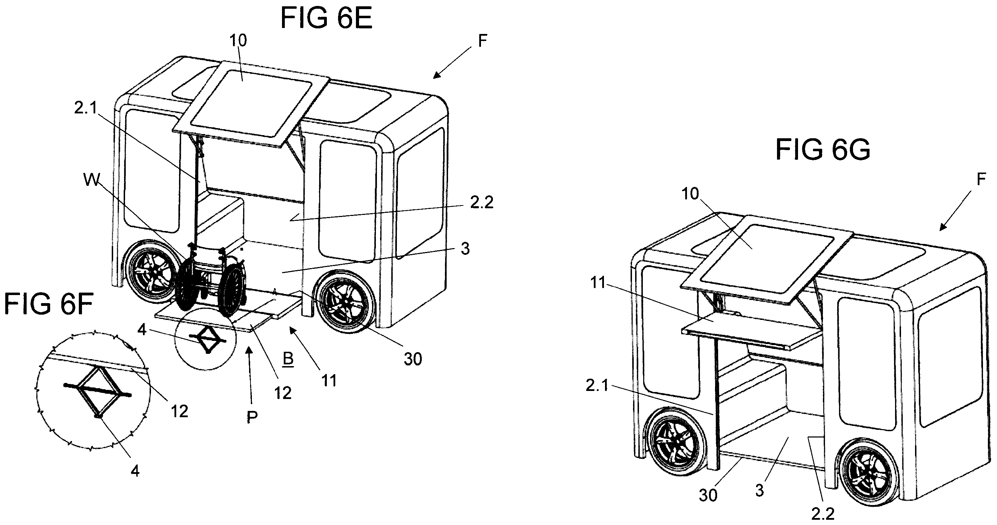

Bei der Weiterbildung der Figuren 6A bis 6G ist an dem translatorisch ausfahrbaren Zusatzelement 12 der Plattformeinheit P an einer dem Untergrund B zugewandten Unterseite ein zusätzliches Stützteil 4 vorgesehen. Über dieses zusätzliche Stützteil 4 wird ein barrierefreier Zugang zu dem Fahrzeug F weiter unterstützt. So integriert das Stützteil 4 einen Kniehebelmechanismus, der sich am Untergrund B abstützen kann. Durch Betätigung des Kniehebelmechanismus kann das Stützteil 4 dann ein Anheben der Plattformeinheit P unterstützen, wenn auf der bereitgestellten Tritt- und/oder Ladefläche vergleichsweise viel Gewicht lastet, beispielsweise durch einen der Figur 6E dargestellten Rollstuhl W. So kann die Plattformeinheit P zunächst vollständig auf den Untergrund B abgesenkt werden. Anschließend wird über die Spindelantriebe an den Führungsschienen 2.1 und 2.2 die Plattformeinheit P angehoben. Das Anheben kann nun durch das Stützteil 4 an dem ausgefahrenen Zusatzelement 12 unterstützt werden, indem auch der Kniehebelmechanismus des Stützteils 4 motorisch angetrieben wird.

Grundsätzlich lassen sich durch den Kniehebelmechanismus des Stützteils 4 in einer Ausführungsvariante auch die Halteelemente 11.1 und 11.2 aussparen, da sich Höchstlasten mit dem Kniehebelmechanismus bis zur Einstiegshöhe anheben lassen und geringere Lasten alleine über die Verstellschieber 111, 112 im Einstiegsbereich in der Höhe bewegbar sind.

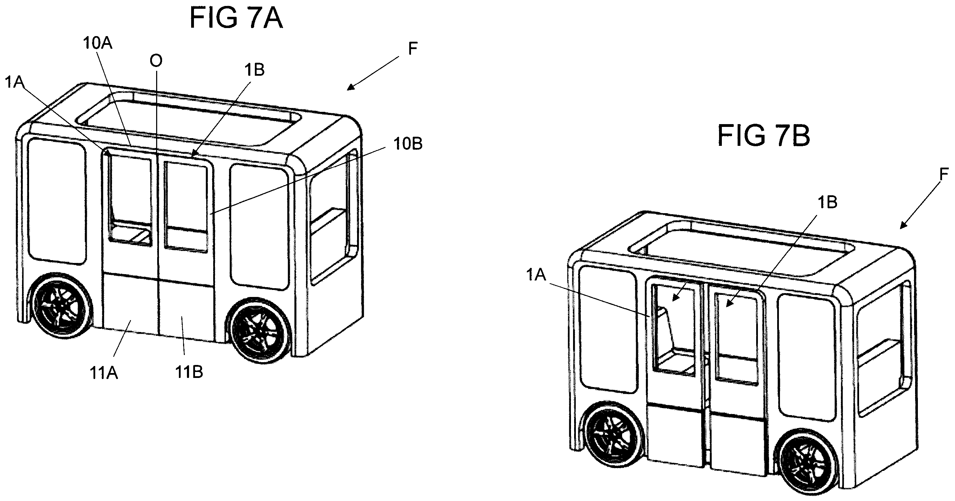

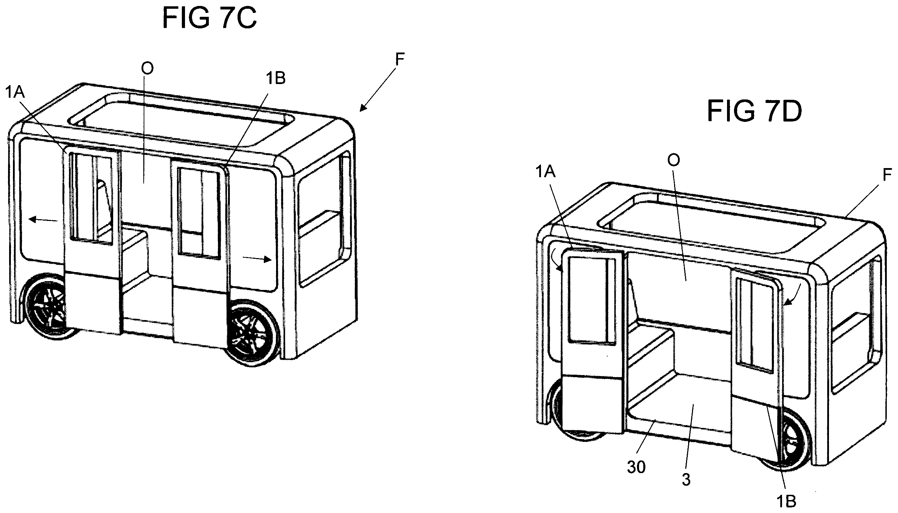

Ist bei den Ausführungsvarianten der Figuren 1A bis 6G eine einzelne mehrteilige Tür 1 zum Verschließen der Karosserieöffnung O vorgesehen, zeigen die Figuren 7A bis 7D exemplarisch eine Ausführungsvariante eines vorgeschlagenen Fahrzeugs F, bei der die Karosserieöffnung O durch eine zweiflüglige Doppeltür verschließbar ist. Hier sind folglich zwei gegenläufig zueinander verstellbare Türen 1A und 1B vorgesehen. Jede dieser Türen 1A, 1B ist vorliegend zweiteilig mit je einem Türblattelement 10A oder 10B sowie einem flächigen Plattformelement 11A oder 11B ausgebildet. Bei der Variante der Figuren 7A bis 7D sind die Türen 1A und 1B über eine Schiebebewegung zueinander gegenläufig verstellbar und anschließend zueinander gegenläufig nach außen schwenkbar, um die Karosserieöffnung O freizugeben.

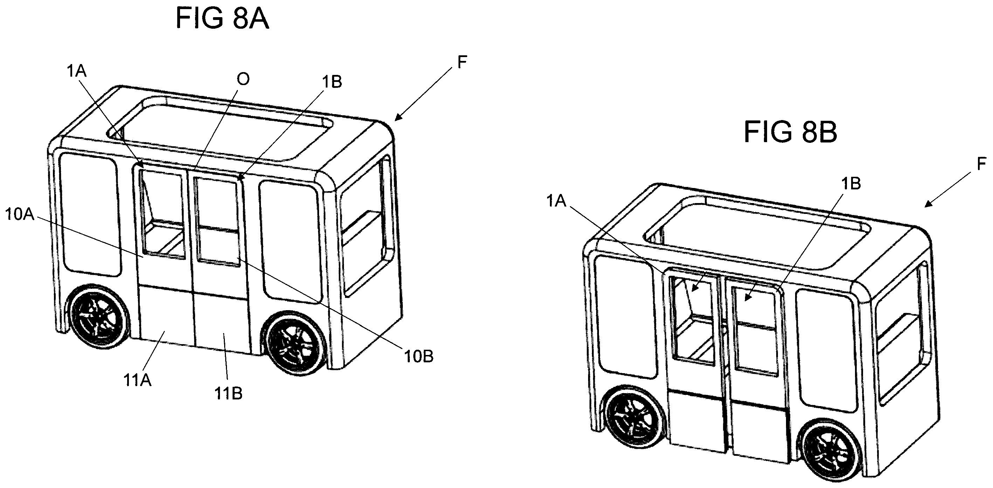

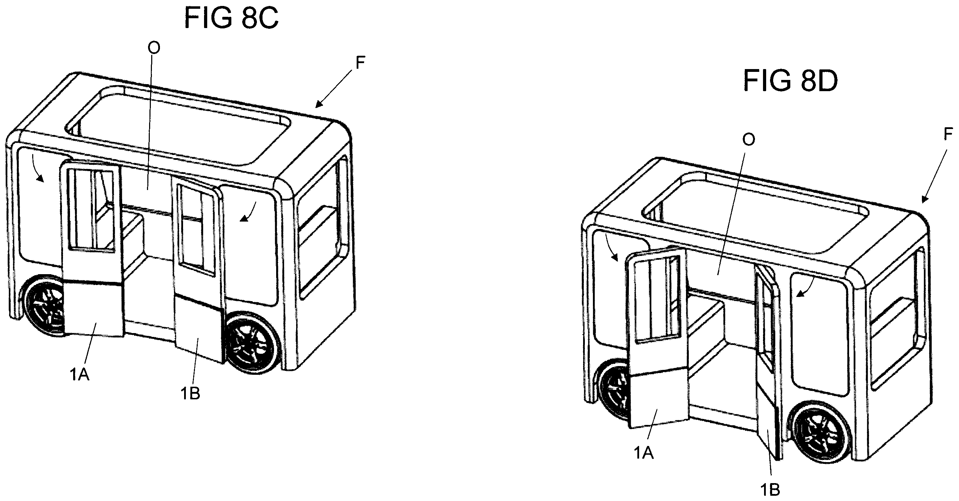

Bei einer anhand der Figuren 8A bis 8D exemplarisch veranschaulichten Variante können die Türen 1A und 1B eine kombinierte Schiebe-Schwenk-Bewegung ausführen, um zwischen den Öffnungs- und Schließpositionen verstellt zu werden.

Letztlich unabhängig von den Verstellbewegungen, über die die Türen 1A und 1B in einem ersten Verstellmodus geöffnet und geschlossen werden können, ohne dass an der Einstiegskante der Karosserieöffnung O eine Plattformeinheit P zur Verfügung gestellt wird, lassen sich auf Basis der vorgeschlagenen Lösung unterschiedliche Ausführungsvarianten realisieren, bei denen in einem zweiten Verstellmodus die jeweiligen Plattformelemente 11A und 11B von den Türblattelementen 10A und 10B unabhängig verstellbar sind, um eine Plattformeinheit P bereitzustellen. Hierbei sind die Plattformelemente 11A und 11B an der jeweiligen Türaußenseite befestigt. Ferner können sich die Türen 1A und 1B nicht nur aufdrehen, sondern aufschieben oder überlagert aufschieben und aufdrehen. Hierdurch wird gegenüber den zuvor diskutierten Varianten ein abweichender und regelmäßiger kleinerer Öffnungsbereich respektive Schwenkraum benötigt.

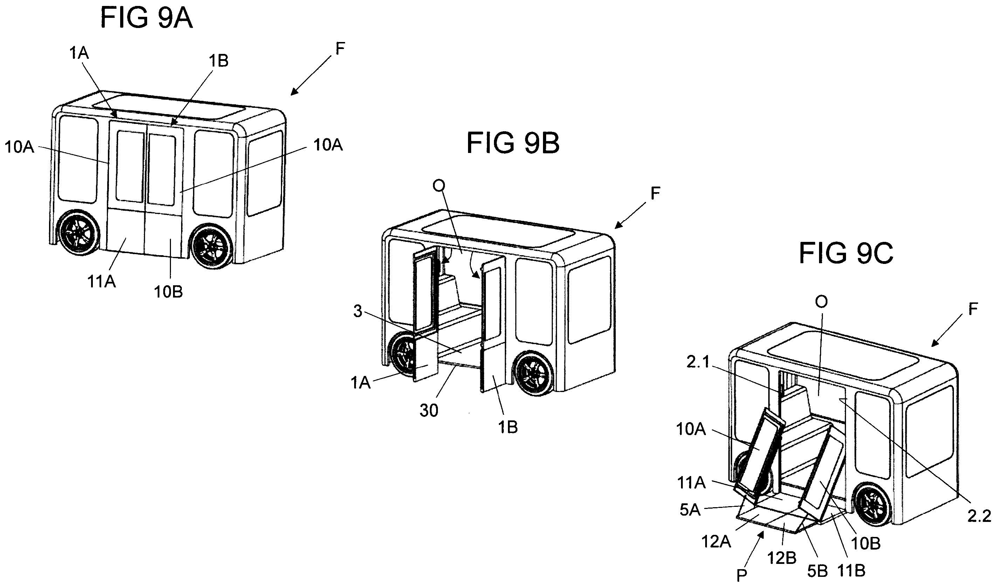

Bei der Ausführungsvariante der Figuren 9A bis 9C werden beispielsweise die Türen 1A und 1B zueinander gegenläufig aufgeschwenkt, sodass die in einer Schließposition dem Fahrzeuginnenraum zugewandten Innenseiten der Türen 1A und 1B einander zugewandt sind, wenn die Türen 1A und 1B geöffnet sind. Von dieser Öffnungsposition ausgehend können nun die unteren Teile der Türen 1A und 1B in Form der Plattformelemente 11A und 11B aufeinander zugeklappt und miteinander verriegelt werden, um hierüber eine Tritt- und/oder Ladefläche einer Plattformeinheit P zur Verfügung zu stellen. Die Plattformelemente 11A und 11B können folglich ausgehend von einer ersten Verstellpositionen entsprechend der Figur 9B um eine quer zur Fahrzeuglängsrichtung L verlaufende Schwenkachse aufeinander zu in eine jeweilige zweite Verstellposition ausgeklappt werden. Die Türen 1A und 1B respektive die hiermit definierten Türflügel werden in dieser Variante folglich nicht über das Dach gedreht, sondern über einen Schiebe-Schwenk-Einheit an der Fahrzeuglängsseite verstellt. Zusätzlich können an den Plattformelementen 11A und 11B ausfahrbare Zusatzelemente 12A und 12B vorgesehen sein, um die Tritt- und/oder Ladefläche zu vergrößern.

Zur Stabilisierung der ausgeklappten Plattformeinheit P können die Türblattelemente 10A und 10B gekippt werden, sodass hierüber eine Verbindung zwischen einem von der Einstiegskante entfernten Abschnitt der Plattformeinheit P zu einer Führungsschiene 2.1 oder 2.2 der seitlichen Rahmenstrukturen der Karosserieöffnung O bereitgestellt ist.

Für die zusätzliche zugbelastete Abstützung der ausgefahrenen Zusatzelemente 12A und 12B können Verbindungselemente 5A und 5B vorgesehen sein. Diese Verbindungselemente 5A und 5B greifen jeweils an einem ausgefahrenen Zusatzelement 12A oder 12B an und verbinden diese mit dem verkippten Türblattelement 10A oder 10B. Über die verkippten Türblattelemente 10A und 10B sowie die zusätzlichen Verbindungselemente 5A und 5B sind folglich die Plattformelemente 11A und 11B sowie die hieran translatorisch nach außen ausfahrbaren Zusatzelemente 12A und 12B in Gebrauchslage der Plattformeinheit P gehalten und stabilisiert.

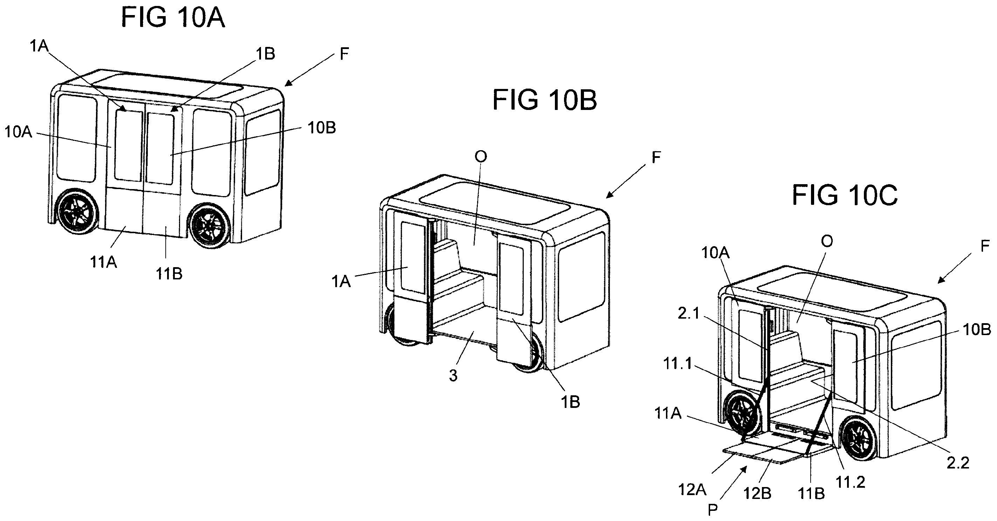

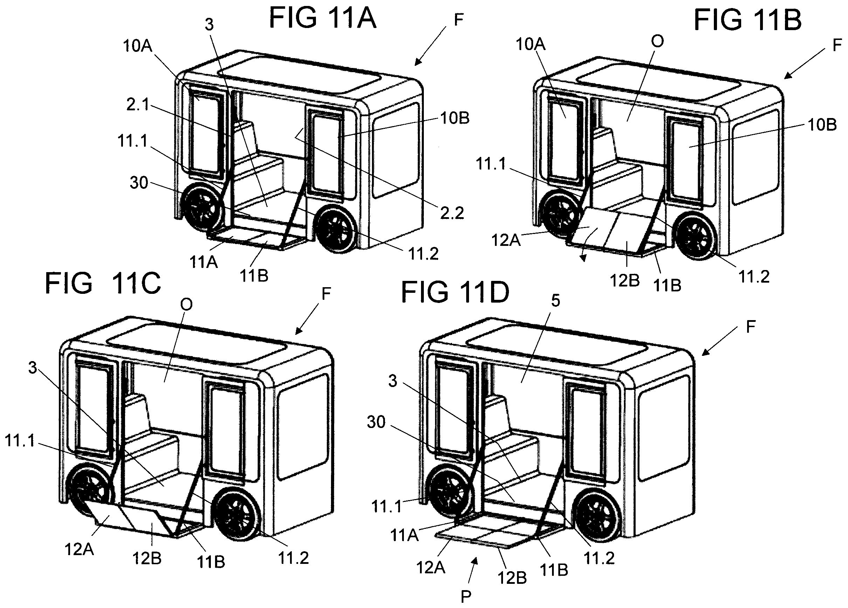

Wie anhand der Ausführungsbeispiele der Figuren 10A bis 10C und 11A bis 11D veranschaulicht ist, ist für die vorstehend erläuterte Stabilisierung der ausgeklappten respektive ausgefahrenen Stellung der Plattform- und Zusatzelemente 11A, 11B, 12A und 12B nicht zwingend ein Verkippen der Türblattelemente 10A oder 10B vorzusehen.

Alternativ kann zum Beispiel, wie vorstehend auch bereits ausgeführt, die Verwendung von separaten Halteelementen 11.1 und 11.2 vorgesehen sein.

Anhand der Ausführungsvariante der Figuren 10A bis 10C ist hierbei veranschaulicht, wie die Türblattelemente 10A und 10B zum Freigeben der Karosserieöffnung O einerseits zueinander gegenläufig seitwärts zusammen mit den Plattformelementen 11A und 11B verstellt werden können. Andererseits können lediglich die Türblattelemente 10A und 10B zueinander gegenläufig seitwärts verstellt werden, während über die jeweiligen unteren Teile der Türen 1A und 1B in Form der Plattformelemente 11A und 11B die Plattformeinheit P vor der Einstiegskante der Karosserieöffnung O zur Verfügung gestellt wird. Bei einem entsprechenden Ausklappen nach vorne bleibt ein vorderer Bereich der jeweiligen Plattformelemente 11A und 11B und damit der Plattformeinheit P über die mit Stangen ausgebildeten Halteelemente 11.1 und 11.2 mit dem Führungsschienen 2.1 und 2.2 verbunden. Hierüber ist die Beibehaltung einer horizontalen Ausrichtung der Tritt- und/oder Ladefläche auch unterstützt, wenn die Plattformeinheit P in ihrer Gebrauchslage in der Höhe bezüglich der Einstiegskante verstellt wird.

Die Figuren 11A bis 11D veranschaulichen in Ergänzung zu der Ausführungsvariante der Figuren 10A bis 10D das Ausklappen der zusätzlichen flächigen Zusatzelemente 12A und 12B um eine zu der Fahrzeuglängsrichtung L parallele Schwenkachse an den jeweils zugeordneten Plattformelementen 11A und 11B, wenn die Plattformelemente 11A und 11B bereits nach unten abgeklappt wurden.

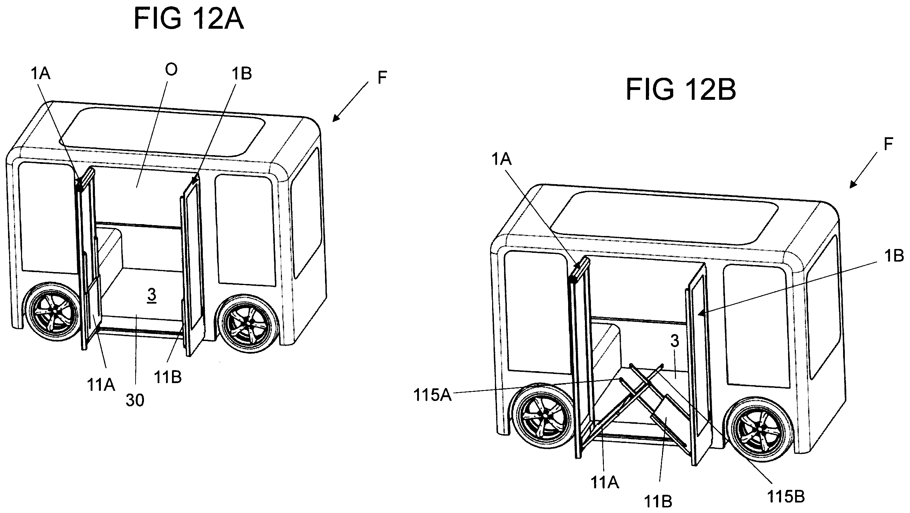

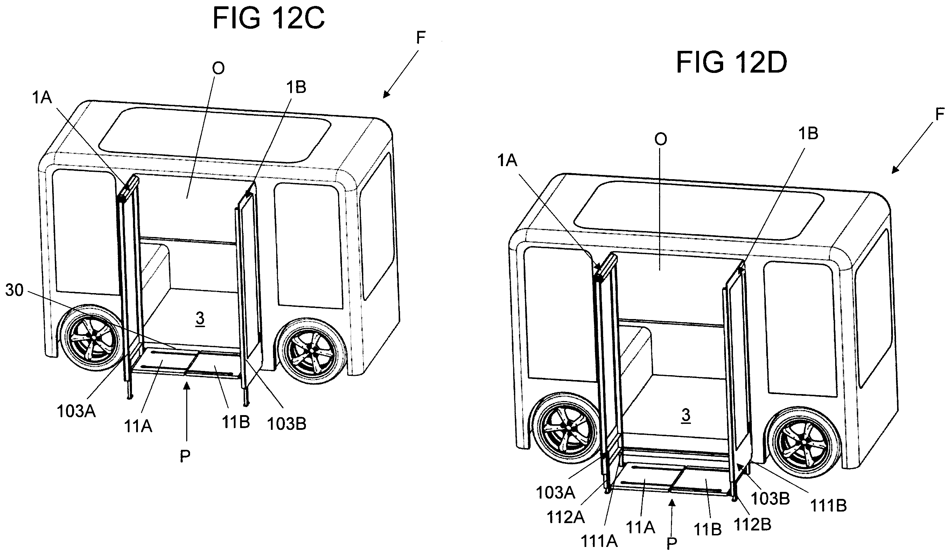

Bei der Ausführungsvariante der Figuren 12A bis 12D sind erneut zwei zueinander gegenläufig aufschwenkbare Türen 1A und 1B vorgesehen. Hierbei ist dann aber ein Plattformelement 11A oder 11B der jeweiligen Tür 1A oder 1B in einer Schließposition der jeweiligen Tür 1A oder 1B nicht dazu verwendet, die Karosserieöffnung O zu verschließen. Dies übernimmt an der jeweiligen Tür 1A, 1B allein ein durchgängig ausgeführtes Türblattelement 10A oder 10B. An einer Innenseite des jeweiligen Türblattelements 10A oder 10B ist ein Plattformelement 11A oder 11B festgelegt und schwenkbar gelagert.

Wie anhand der Figuren 12A bis 12D veranschaulicht ist, werden bei dieser Ausführungsvariante zunächst die Türen 1A und 1B zueinander gegenläufig aufgeschwenkt, sodass ihre Innenseiten aneinander zugewandt sind. Von den einander gegenüberliegenden Türblattelementen 10A und 10B lassen sich dann bei Bedarf die Plattformelemente 11A und 11B jeweils um zueinander parallele Schwenkachsen, die quer zur Fahrzeuglängsrichtung L verlaufen, aufeinander zu klappen. Größe und Abstand der Plattformelemente 11A und 11B sind hierbei derart bemessen, dass die abgeklappten und damit eine zweite Verstellposition einnehmenden Plattformelemente 11A und 11B eine durchgängige Tritt- und/oder Ladefläche zwischen den beiden geöffneten Türen 1A und 1B definieren. Es wird mithin eine Plattformeinheit P zwischen den Türblattelementen 10A und 10B gebildet. Bei einer derartigen Variante ist über die einander gegenüberliegenden Türblattelemente 10A, 10B der ausgeschwenkten Türen 1A und 1B auch ein Sichtschutz und Kollisionsschutz für über die Plattformeinheit P einsteigende oder aussteigende Personen gegeben.

Hierbei sind zur zusätzlichen Stabilisierung der damit vorgegebenen Gebrauchslage der Plattformeinheit P die beiden abgeklappten Plattformelemente 11A und 11B über Verriegelungselemente, hier in Form von Verriegelungsgestängen 115A und 115B, miteinander form- und/oder kraftschlüssig verriegelt.

Über an beiden Türen 1A und 1B vorgesehene Führungseinrichtungen 103A und 103B ist die Plattformeinheit P in ihrer Höhe variierbar. Hierfür lassen sich mit den Plattformelementen 11A und 11B paarweise verbundene Verstellschieber 111A, 112A oder 111B, 112B über motorisch antreibbare Antriebsspindeln der Führungseinrichtungen 103A und 103B entlang der Fahrzeughochrichtung H verstellen. Die horizontale Tritt- und/oder Ladefläche der Plattformeinheit P lässt sich somit an der Karosserieöffnung O in ihrer Höhe bezüglich der Einstiegskante bei Bedarf ohne weiteres elektronisch gesteuert verändern.

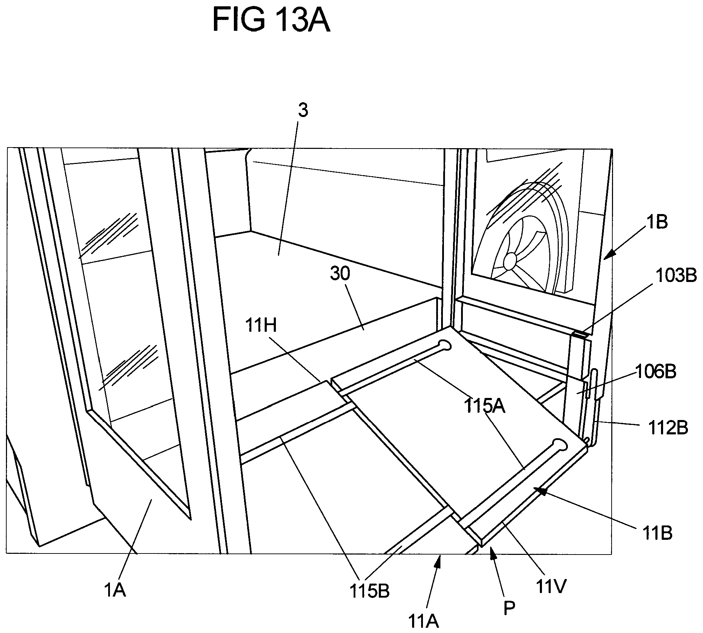

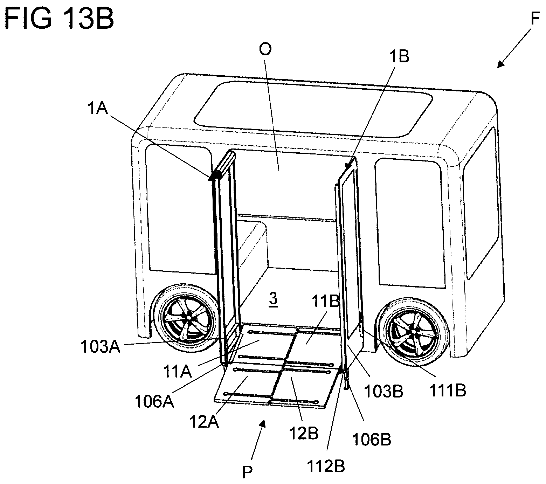

Indem die Verstellschieber 111A, 112A und 111B, 112B synchron entlang der türseitigen Führungseinrichtungen 103A und 103B verstellt werden, verändert sich lediglich die Höhe der weiterhin horizontal ausgerichteten Tritt- und/oder Ladefläche der Plattformeinheit P. Wie anhand der Figuren 13A und 13B veranschaulicht ist, ist es aber auch ohne weiteres möglich, über die Führungseinrichtung 103A und 103B die Plattformeinheit P zu kippen und hierüber eine Rampe zu bilden, die mit einer Vorderkante 11V am Untergrund B vor der Einstiegskante der Karosserieöffnung O aufliegt. So werden hierfür beispielsweise lediglich die vorderen Verstellschieber 112A und 112B in Richtung des Untergrunds B abgesenkt, während die hinteren einstiegskantennahen Verstellschieber 112A und 112B in ihrer Position verbleiben.

Zur zusätzlichen Abstützung der aufgeschwenkten Türen 1A und 1B respektive ihrer Türblattelemente 10A und 10B, wenn hieran die Plattformeinheit P gehalten ist, können an den Türen 1A und 1B zusätzliche teleskopartig ausfahrbare Stützelemente in Form von Stützfüßen 106A und 106B vorgesehen sein. Über diese Stützfüße 106A, 106B kann sich ein jeweiliges Türblattelement 10A und 10B zusätzlich an dem Untergrund B abstützen, insbesondere bei bereitgestellter Plattformeinheit P. Über die Stützfüße 106A, 106B ist mithin eine Lastaufnahme der miteinander verrasteten Hälften der Plattformeinheit P realisiert, die hierüber nach Art einer Hebebühne in ihrer Höhe verstellbar sind.

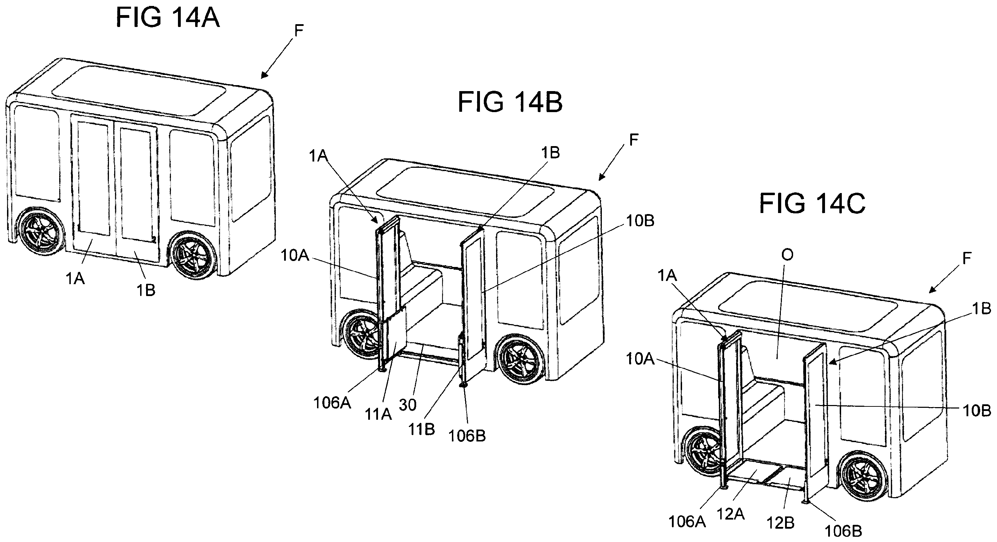

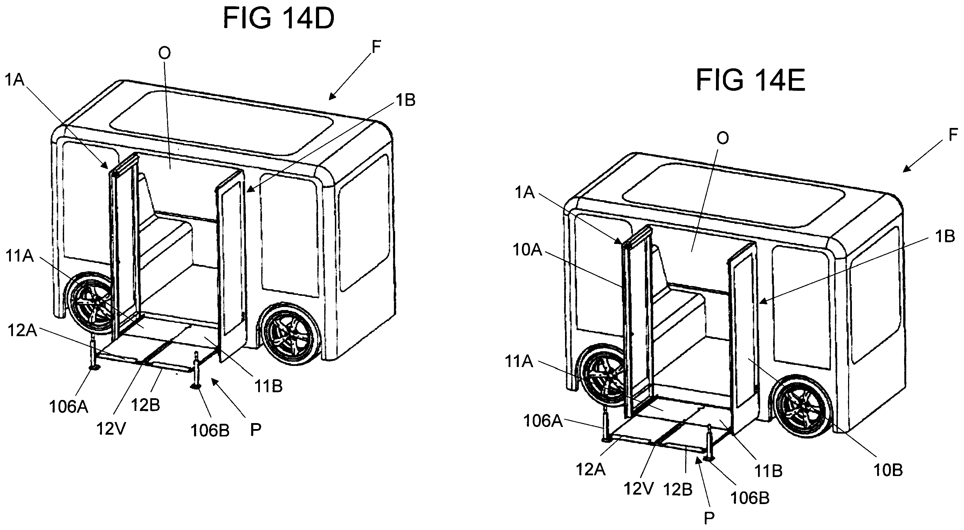

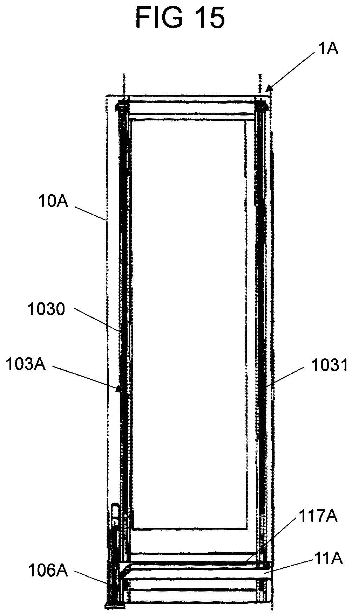

Wie anhand der Ausführungsvariante der Figuren 14A bis 14E und 15 veranschaulicht ist, können derartige Stützfüße 106A, 106B auch an einem ausfahrbaren Zusatzelement 12A oder 12B der Plattformeinheit P vorgesehen sein. Über die Stützfüße 106A, 106B lässt sich folglich die Plattformeinheit P an dem Untergrund B an einem zu der Einstiegskante der Karosserieöffnung O entfernten vorderen Bereich zusätzlich abstützen.

Wie insbesondere aus der Seitenansicht der Figur 15 ersichtlich ist, ist hierbei ein Zusatzelement 12A oder 12B an einem von dem jeweiligen Türblattelement 10A oder 10B abklappbaren Plattformelement 11A oder 11B translatorisch verschieblich gelagert. Hierfür weist ein Plattformelement 11A oder 11B eine Führungskulisse auf, die für das eine Plattformelement 11A mit 117A bezeichnet in der Figur 15 ersichtlich ist. Über das Ausfahren des Zusatzelements 12A, 12B an der jeweiligen Führungskulisse entlang wird auch ein hieran festgelegter Stützfuß 106A oder 106B mit nach vorne ausgefahren, um mit Abstand zu dem Türblattelement 10A oder 10B auf dem Untergrund B aufgesetzt werden zu können.

Auch bei der Ausführungsvariante der Figuren 14A bis 14E und 15 ist die Plattformeinheit P in ihrer Gebrauchslage höhenverstellbar. Dies wird auch hier über türseitige Führungseinrichtungen 103A und 103B erreicht. Analog zu den Antriebsspindeln 200 und 201 an den seitlichen Rahmenstrukturen bei den zuvor erläuterten Ausführungsvarianten können auch türseitige Führungseinrichtungen 103A, 103B entsprechende Antriebselemente 1030, 1031 z.B. in Form von Antriebsspindeln umfassen. Ein motorischer Antrieb zum Antreiben dieser Antriebselemente 1030 und 1031, die zueinander parallel verlaufend an den Längsseiten eines Türblattelements 10A oder 10B bei der Variante der Figur 15 vorgesehen sind, kann beispielsweise einen Antriebsmotor in einem Kopfbereich des jeweiligen Türblattelements 10A oder 10B umfassen.

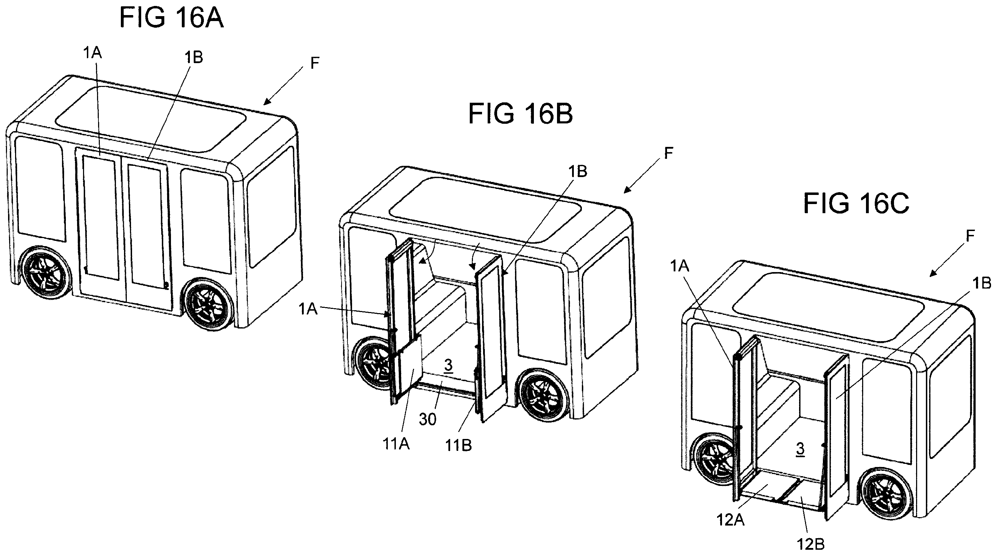

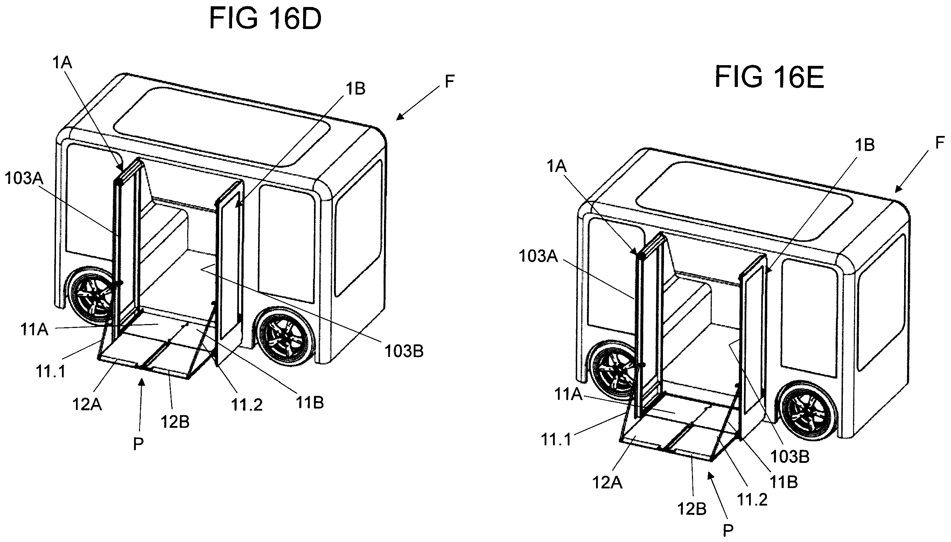

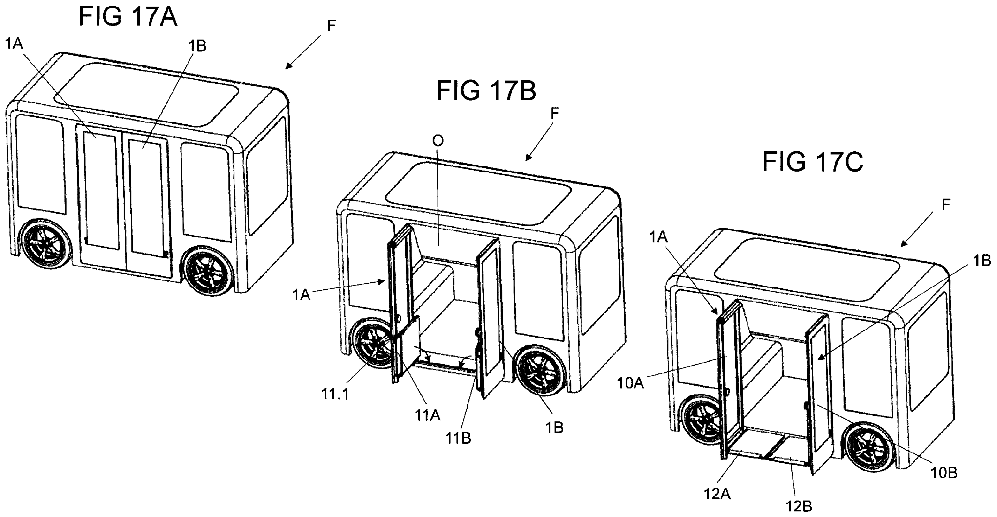

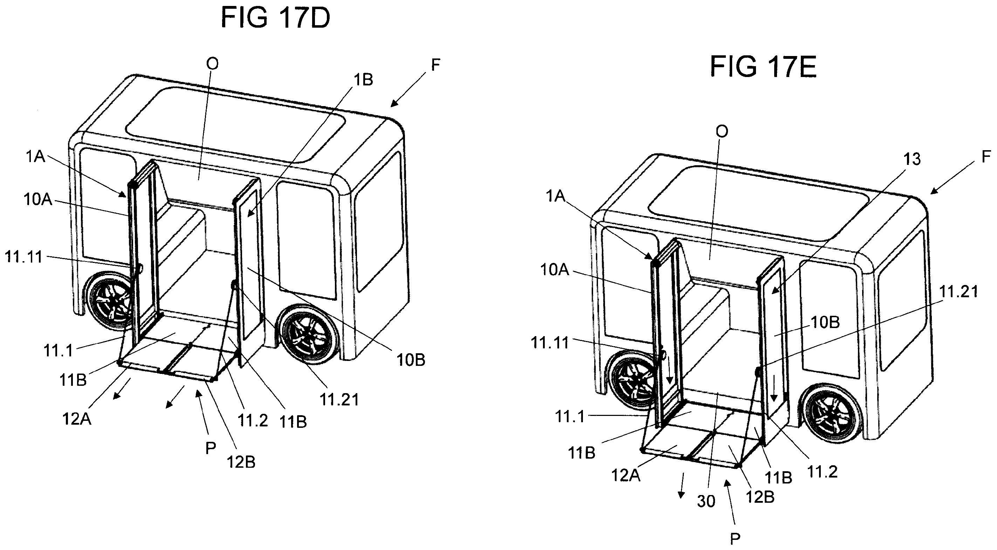

Bei den Ausführungsvarianten der Figuren 16A bis 16E und 17A bis 17E sind Halteelemente 11.1 und 11.2 zur Stabilisierung der Gebrauchslage der ausgeklappten Plattformeinheit P vorgesehen, die die Zusatzelemente 12A, 12B jeweils mit einem zugeordneten Türblattelement 10A oder 10B verbinden. Die Halteelemente 11.1, 11.2 sind jeweils für die Aufnahme einer Zuglast vorgesehen, die in das jeweilige Türblatt 10A oder 10B eingeleitet werden soll.

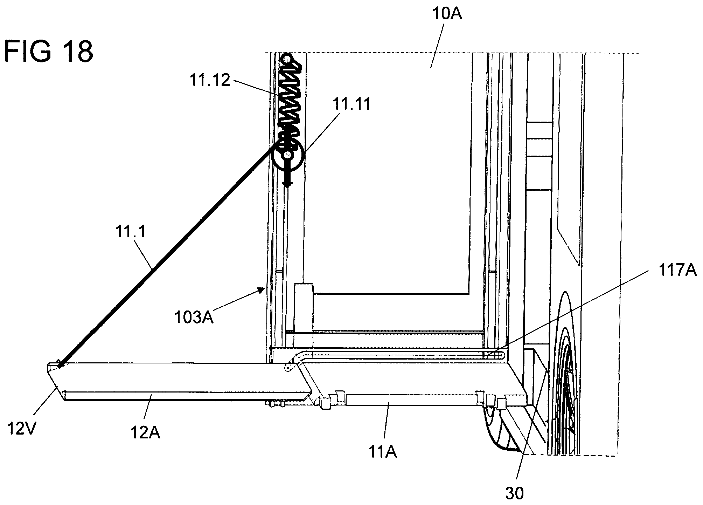

Während bei der Ausführungsvariante der Figuren 16A bis 16E die Halteelemente 11.1 und 11.2 jeweils starre Elemente, zum Beispiel Stangen, umfassen, sieht die Ausführungsvariante der Figuren 17A bis 17E Halteelemente 11.1 und 11.2 mit jeweils einem flexiblen Zugmittel, zum Beispiel in Form eines (Zug-)Seiles vor. Bei der Ausführungsvariante der Figuren 17A bis 17E ist entsprechend der vergrößerten Detaildarstellung der Figur 18 ein entsprechendes (Zug-) Seil eines Halteelements 11.1, 11.2 über jeweils ein Verbindungsteil in Form einer Lagerrolle 11.11 oder 11.21 an dem zugehörigen Türblattelement 10A oder 10B gehalten. Jede Lagerrolle 11.11 oder 11.21 ist hierbei über ein Federelement in Form einer Zugfeder elastisch verlagerbar gelagert. Für die eine Tür 1A ist dies in der Figur 18 mit einer Zugfeder 11.12 näher veranschaulicht. Derart ist an einer Vorderkante 12V eines ausgefahrenen Zusatzelements 12A oder 12B eine zusätzliche Halterung mit einem Halteelement 11.1 oder 11.2 vorgesehen, die an dem zugehörigen Türblattelement 10A oder 10B elastisch gelagert ist.

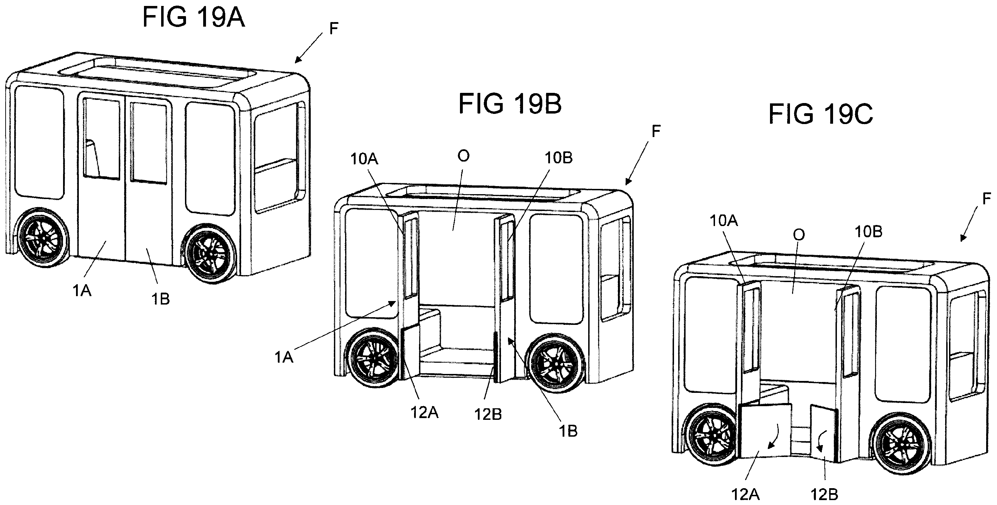

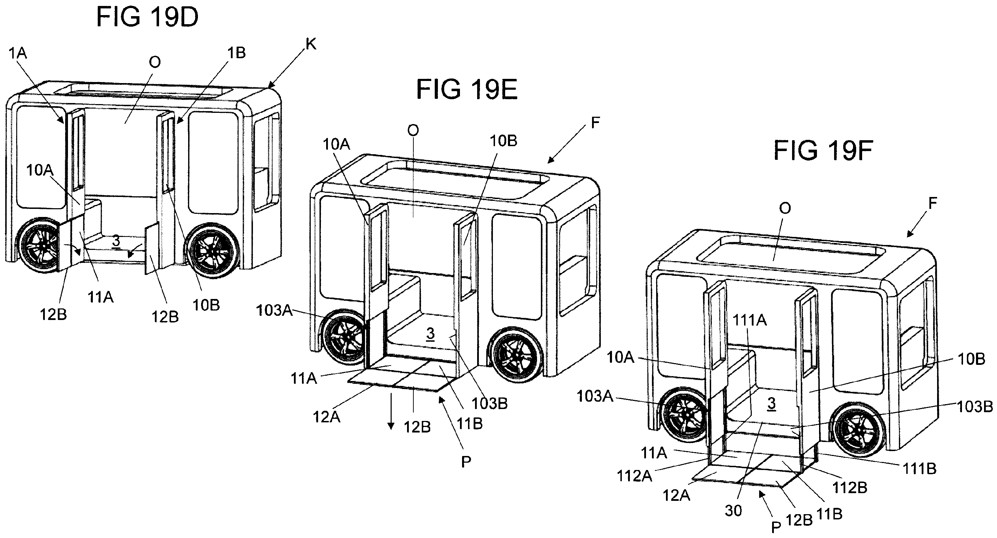

Bei der Ausführungsvariante der Figuren 19A bis 19F werden an den in die jeweilige Öffnungsposition aufgeschwenkten Türen 1A und 1B zunächst jeweils die Zusatzelemente 12A und 12B um eine zu der Fahrzeughochrichtung H parallele Schwenkachse nach außen geschwenkt. Im Anschluss werden die zugehörigen Plattformelemente 11A und 11B - zusammen mit den Zusatzelementen 12A und 12B - aufeinander zu um jeweils eine quer zu der Fahrzeuglängsrichtung L verlaufende Schwenkachse geklappt. Die dann entsprechend der Figur 19E aufeinander zugeklappten Elemente 11A bis 12B sind in der dargestellten zweiten Verstellposition dann miteinander verriegelt, um eine starre, durchgehende Tritt- und/oder Ladefläche für die Plattformeinheit P zu bilden. Diese Tritt- und/oder Ladefläche der Plattformeinheit P ist erneut über die in die Türen 1A und 1B integrierten Antriebe in ihrer Höhe verstellbar.

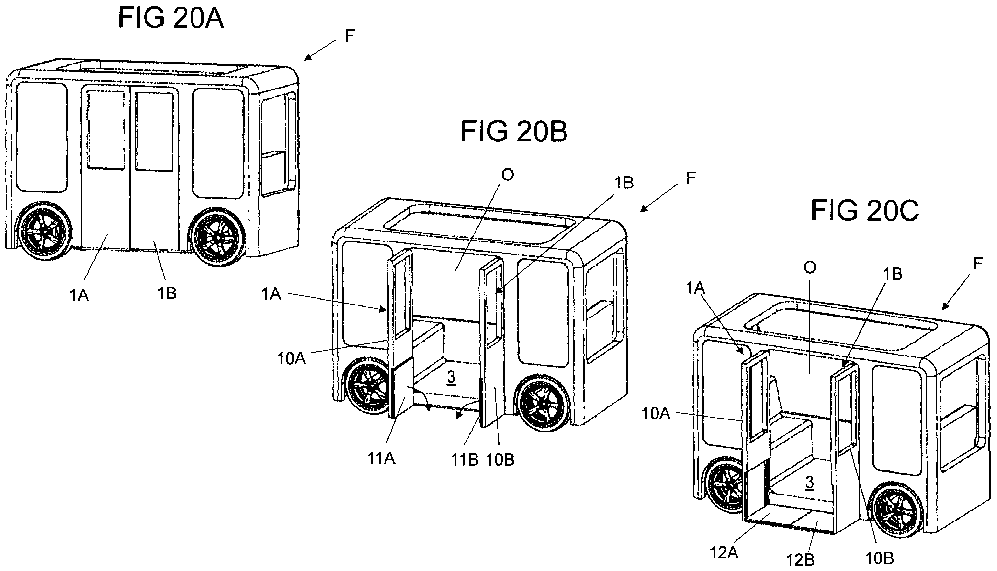

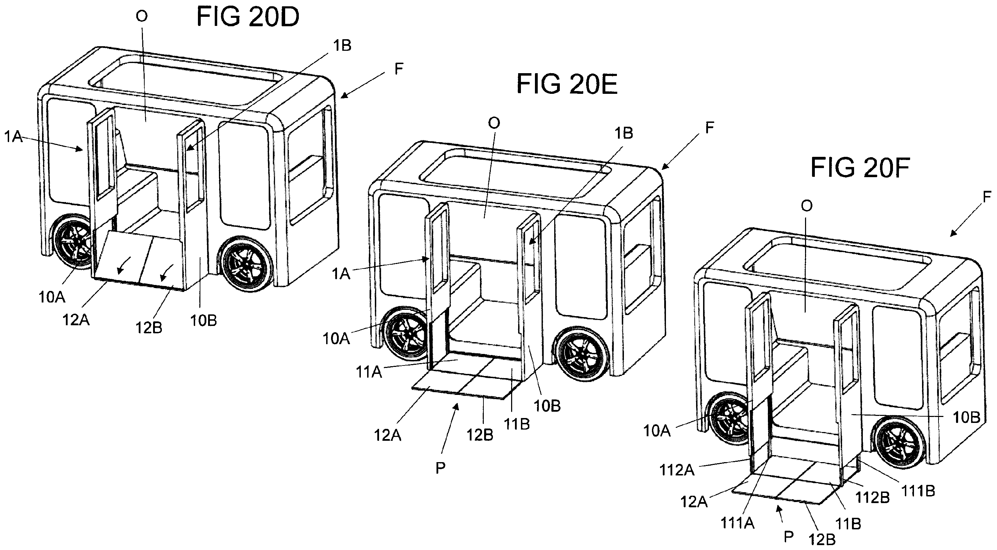

Bei der Ausführungsvariante der Figuren 20A bis 20F liegt die Plattformeinheit P in ihrer Gebrauchslage analog zu der Ausführungsvariante der Figuren 19A bis 19F vor. Lediglich die Reihenfolge der Klapp- und Schwenkbewegungen ist unterschiedlich. So ist bei der Ausführungsvariante der Figuren 20A bis 20F zunächst jeweils eine Schwenkbewegung der Plattformelemente 11A und 11B aufeinander zu vorgesehen, bevor im Anschluss die Zusatzelemente 12A und 12B nach außen geklappt werden.

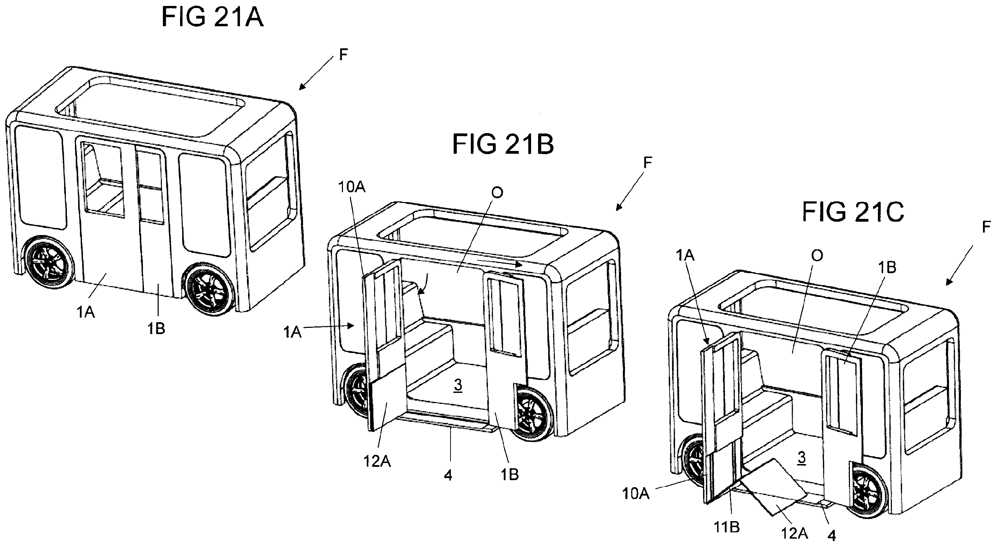

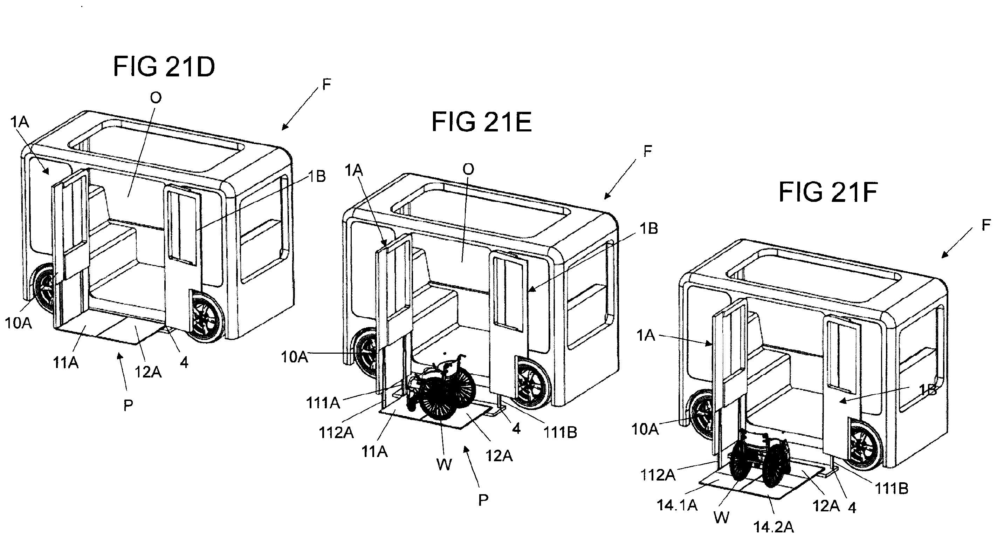

Bei der Ausführungsvariante der Figuren 21A bis 21F sind erneut zwei Türen 1A und 1B zum Verschließen der Karosserieöffnung O vorgesehen. Hierbei ist eine (in den Figuren die linken) Tür 1A um eine zu der Fahrzeughochrichtung H parallele Schwenkachse in eine Öffnungsposition aufschwenkbar. Diese Tür 1A trägt an einem Türblattelement 10A ein Plattformelement 11A sowie ein hieran schwenkbar gelagertes Zusatzelement 12A für die Bildung einer Plattformeinheit P. Die Tritt- und/oder Ladefläche der Plattformeinheit P ist hierbei über zusätzliche, vorliegend an dem Plattformelement 11A und dem Zusatzelement 12A ausklappbare Verlängerungsstücke 14.1A, 14.2A bei Bedarf noch zusätzlich vergrößerbar. Die gegenüberliegende zweite (rechte) Tür 1B ist vorliegend im Wesentlichen parallel zu der Fahrzeuglängsrichtung L verschiebbar und trägt keinen Teil der Plattformeinheit P, der eine Tritt- und/oder Ladefläche definieren würde. Erneut ist ein Verstellantrieb vorgesehen, mit dem die in einer Gebrauchslage entsprechend den Figuren 21D, 21E und 21F vorliegende Plattformeinheit P in ihrer Höhe variierbar ist, wenn die Plattform- und Zusatzelementen 11A und 12A um ihre zueinander parallel und jeweils quer zur Fahrzeuglängsrichtung L verlaufenden Schwenkachsen ausgeklappt wurden. So liegt ein einstiegskantennaher Randbereich der in der Gebrauchslage vorliegenden Plattformeinheit P auf einem längserstreckten und unterhalb der Einstiegskante verlaufenden Stützelement 4 auf. Dieses Stützelement 4 ist über karosserieseitige Verstellschieber 111A und 111B im Bereich der beiden Fahrzeugtüren 1A und 1B entlang der Fahrzeughochrichtung H verstellbar. Indem diese Verstellung synchron zu einer Verstellung eines vorderen Verstellschiebers 112A der ersten Tür 1 erfolgt, an der das Plattformelement 11A festgelegt ist, kann die Plattformeinheit P mit horizontal verlaufender Tritt- und/oder Ladefläche translatorisch verstellt werden, beispielsweise um hierüber nach Art einer Hebebühne einen Rollstuhl W auf die Höhe der Einstiegskante anheben zu können.

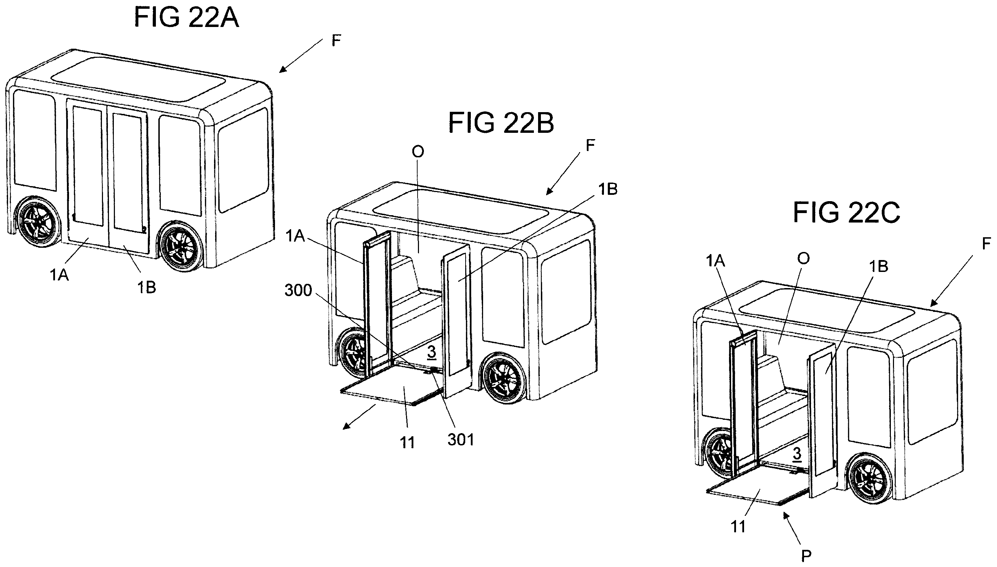

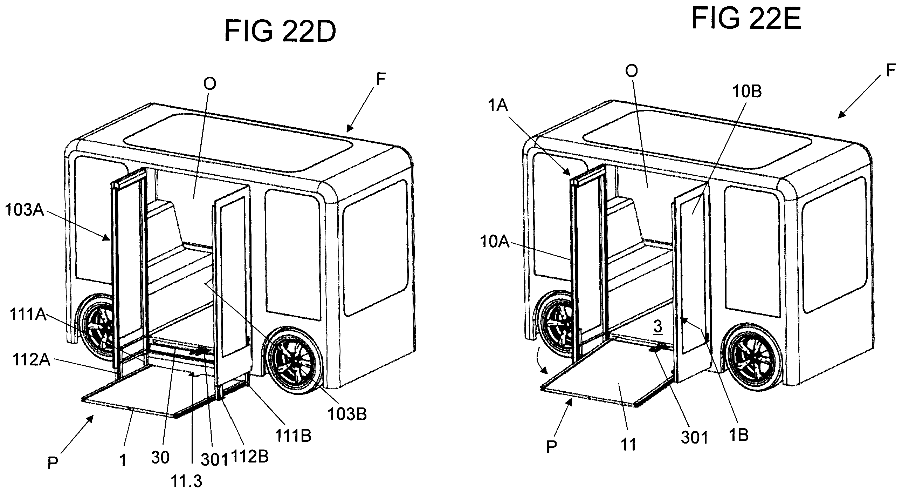

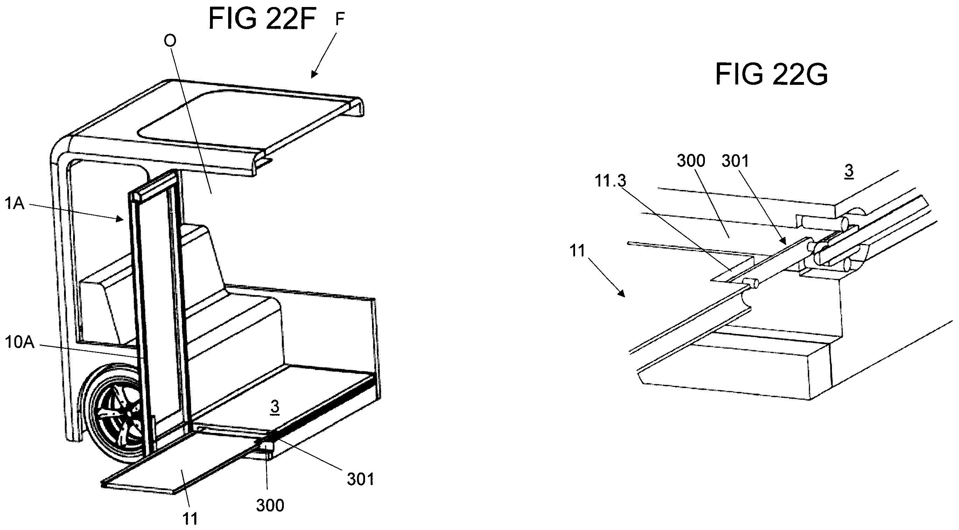

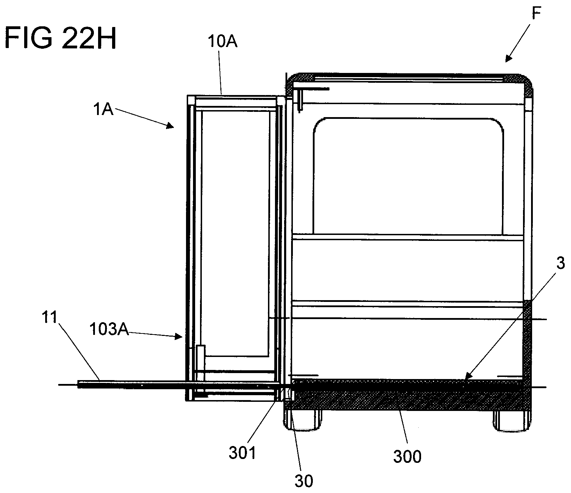

Die Figuren 22A bis 22E veranschaulichen eine weitere Ausführungsvariante eines vorgeschlagenen Fahrzeugs F gemäß der vorgeschlagenen Lösung. Bei dem dargestellten Fahrzeug F sind zum Verschließen der Karosserieöffnung O erneut zwei gegenläufig aufschwenkbare Türen 1A und 1B vorgesehen. Diese Türen 1A und 1B definieren in einer jeweiligen Öffnungsposition eine Führung für ein unterhalb des Bodenelements 3 aus einem Stauraum 300 ausfahrbares Plattformelement 11. Dabei ist zum Ein- und Ausfahren des Plattformelements 11 ein in dem Stauraum 300 untergebrachter motorisch angetriebener Versteller 301 mit einem Verstellgestänge vorgesehen. Dies ist insbesondere anhand der zusätzlichen Darstellungen der Figuren 22F, 22G und 22H näher veranschaulicht.

Der Versteller 301 ist über eine Schnittstelle 11.3 mit dem Plattformelement 11 lösbar verbunden. Derart kann über den Versteller 301 das Plattformelement 11 translatorisch aus und wieder eingefahren werden, wenn die Türen 1A und 1B um ihre jeweilige zu der Fahrzeughochrichtung H parallele Schwenkachse um 90° nach außen geschwenkt wurden. Insbesondere beim Ausfahren aus dem Stauraum 300 stützt sich ein ausfahrender Teil des Plattformelements 11 an Führungen eines Türblattelements 10A, 10B der geöffneten Türen 1A und 1B ab. Diese Führungen sind mit Verstellschiebern 111A, 111B und 112A, 112B türseitiger Führungseinrichtungen 103A und 103B verbunden.

Ist das Plattformelement 11 maximal in eine zweite Verstellposition ausgefahren und definiert hierüber eine Gebrauchslage einer Plattformeinheit P, sodass eine von dem ausgefahrenen Plattformelement 11 bereitgestellte Tritt- und/oder Ladefläche vor einer Einstiegskante der Karosserieöffnung O zur Verfügung steht, lässt sich die Position der Plattformeinheit P über die Verstellschieber 111A bis 112B der Führungseinrichtungen 103A, 103B variieren. Werden lediglich die beiden vordersten Verstellschieber 112A und 112B abgesenkt, wird die Plattformeinheit P gekippt, um eine Rampe zu definieren (vergleiche Figur 22E). Werden alle vier Verstellschieber 111A bis 112B synchron nach unten in Richtung des Untergrunds B verstellt, lässt sich die Plattformeinheit P vollständig absenken. Hierbei wird eine Verbindung an der Schnittstelle 11.3 zu dem Versteller 301 gelöst. Die Verbindung zu dem Versteller 301 wird dabei automatisch wiederhergestellt, wenn die Plattformeinheit P in die Ausgangsposition zurückverstellt und mithin angehoben wird. Über den Versteller 301 kann dann das Plattformelement 11 wieder zurück in den fahrzeugseitigen Stauraum 300 gezogen werden.

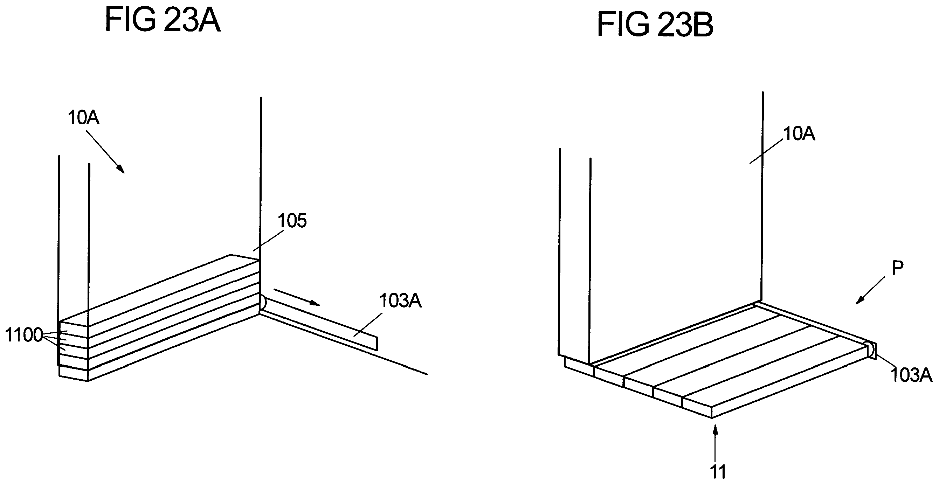

Bei der lediglich ausschnittsweise dargestellten Ausführungsvariante der Figuren 23A und 23B ist ein Plattformelement 11 vollständig innerhalb eines türseitigen Stauraumes 105 eines Türblattelements 10A unterbringbar, wenn keine Plattformeinheit P benötigt wird. Das Plattformelement 11 ist hierbei durch mehrere miteinander verbundene Segmente 1100 gebildet, die innerhalb des Stauraumes 105 übereinander angeordnet werden können. Ist die Fahrzeugtür 1A geöffnet und damit um 90° nach außen an dem Fahrzeug F geschwenkt, kann eine Führungseinrichtung 103A des Türblattelements 10A ausgeklappt oder ausgefahren werden. Beispielsweise umfasst die Führungseinrichtung 103A hierfür einen längserstreckten Führungsarm. Über diesen Führungsarm der Führungseinrichtung 103A ist dann eine körperliche Führung für die aus dem Stauraum 105 fremdkraftbetätigt ausfahrenden Segmente 1100 des Plattformelements 11A bereitgestellt. Derart kann das Plattformelement 11 im Wesentlichen parallel zu der Fahrzeuglängsrichtung L aus dem Türblattelement 10A ausgefahren werden, um die Plattformeinheit P mit ihrer Tritt- und/oder Ladefläche vor der Einstiegskante der Karosserieöffnung O zur Verfügung zu stellen.

### Bezugszeichenliste

- 1, 1A, 1B: Tür
- 10, 10A, 10B: Türblattelement
- 10.1, 10.2: Führungselement
- 100: Kopplungsschnittstelle
- 101, 102: Verstellschieber (Verstellelement)
- 1030, 1031: Antriebselement
- 103A, 103B: Führungseinrichtung
- 105: Stauraum
- 106A, 106B: Stützfuß (Stützelement)
- 11, 11A, 11B: Unterer Türteil / Plattformelement
- 11.1, 11.2: Halteelement
- 11.11, 11.21: Lagerrolle (Verbindungsteil)
- 11.12: Zugfeder (Federelement)
- 11.3: Schnittstelle
- 1100: Segment
- 111, 111A, 111B: Verstellschieber (Verstellelement)
- 112, 112A, 112B: Verstellschieber (Verstellelement)
- 115A, 115B: Verriegelungsgestänge (Verriegelungselement)
- 117A: Führungskulisse
- 11H: Hinterkante
- 11V: Vorderkante
- 12, 12', 12", 12A,12B: Zusatzelement
- 12V: Vorderkante
- 13: Dachteil
- 14.1A, 14.2A: Verlängerungsstück
- 2.1, 2.2: Führungsschiene
- 200, 201: Antriebsspindel (Antriebselement)
- 21, 22: Gelenkhebel
- 3: Bodenelement
- 30: Vorderkante / Einstiegskante
- 300: Stauraum
- 301: Versteller
- 31: Blende
- 4: Stützteil (Stützelement)
- 5A, 5B: Verbindungselement
- B: Untergrund
- F: Fahrzeug
- H: Fahrzeughochrichtung
- L: Fahrzeuglängsrichtung
- O: Karosserieöffnung
- P: Plattformeinheit
- W: Rollstuhl (Ladeobjekt)

## Patentansprüche

1. Fahrzeug, mit
- einer Karosserieöffnung (O), die zumindest teilweise durch mindestens eine in einer Schließposition vorliegende Tür (1, 1A, 1B) verschließbar ist, und
- einer flächigen Plattformeinheit (P), die zur Erleichterung eines Zugangs in das Fahrzeug (F) über die Karosserieöffnung (O) vorgesehen ist, wenn die mindestens eine Tür (1, 1A, 1B) in einer Öffnungsposition vorliegt,
wobei wenigstens ein Teil der flächigen Plattformeinheit (P) durch mindestens ein verstellbares, flächiges Plattformelement (11, 11A, 11B) gebildet ist, das
a) einen Teil der mindestens einen Tür (1, 1A, 1B) bildet, der in der Schließposition zumindest einen Teil der Karosserieöffnung (O) verschließt, oder
b) in wenigstens einer Verstellposition an einem flächigen Türblattelement (10, 10A, 10B) der mindestens einen Tür (1, 1A, 1B) festgelegt und/oder abgestützt ist,
**dadurch gekennzeichnet, dass**
- das in der Schließposition der mindestens einen Tür (1, 1A, 1B) zumindest einen Teil der Karosserieöffnung (O) verschließende Plattformelement (11, 11A, 11B) separat von mindestens einem flächigen Türblattelement (10, 10A, 10B) der Tür (1, 1A, 1B) verstellbar ist, das in der Schließposition zusammen mit dem Plattformelement (11, 11A, 11B) zumindest einen Teil der Karosserieöffnung (O) verschließt, wobei das mindestens eine Plattformelement (11, 11A, 11B) in einer ersten Verstellposition vorliegt, wenn das mindestens eine Plattformelement (11, 11A, 11B) zumindest einen Teil der Karosserieöffnung (O) verschließt und nicht zur Erleichterung eines Zugangs in das Fahrzeug (F) nutzbar ist, und
- das mindestens eine Plattformelement (11, 11A, 11B) zwischen der ersten Verstellposition und einer zweiten Verstellposition verstellbar ist, die eine Gebrauchslage der Plattformeinheit (P) definiert, in der das Plattformelement (11, 11A, 11B) zur Erleichterung eines Zugangs in das Fahrzeug (F) nutzbar ist, wobei die mindestens eine Plattformeinheit (P) in ihrer Gebrauchslage in Höhe und/oder Neigung bezüglich eines in einem Fahrzeuginnenraum des Fahrzeugs (F) vorhandenen Bodens variierbar ist.

2. Fahrzeug nach Anspruch 1, **dadurch gekennzeichnet, dass** die Plattformeinheit (P) mit einem hinteren Bereich einer Vorderkante (30) eines in einem Fahrzeuginnenraum des Fahrzeugs (F) vorgesehenen und an die Karosserieöffnung (O) angrenzenden Bodenelements (3) zugewandt ist und an der Plattformeinheit (P) wenigstens ein Stützelement (4; 106A, 106B) vorgesehen ist, über das die Plattformeinheit (P) in der Gebrauchslage an einem vorderen Bereich an einem außerhalb des Fahrzeugs (F) vorhandenen Untergrund abstützbar ist, insbesondere wobei das Stützelement (4; 106A, 106B) einen motorischen Antrieb aufweist, um die Höhe und/oder Neigung der in der Gebrauchslage vorliegenden Plattformeinheit (P) bezüglich des Bodens zu verändern.

3. Fahrzeug nach einem der vorhergehenden Ansprüche, **dadurch gekennzeichnet, dass** das mindestens eine Plattformelement (11, 11A, 11B) um eine Schwenkachse schwenkbar ist, die parallel zu einer von einem Fahrzeugheck zu einer Fahrzeugfront weisenden Fahrzeuglängsrichtung (L) des Fahrzeugs (F) verläuft oder die senkrecht zu der Fahrzeuglängsrichtung (L) verläuft.

4. Fahrzeug nach einem der vorhergehenden Ansprüche, **dadurch gekennzeichnet, dass** die Plattformeinheit (P) ferner durch mindestens ein flächiges Zusatzelement (12, 12A, 12B) gebildet ist, das an dem mindestens einen Plattformelement (11, 11A, 11B) schwenkbar oder translatorisch verstellbar gelagert ist.

5. Fahrzeug nach den Ansprüchen Anspruch 3 und 4, **dadurch gekennzeichnet, dass** das mindestens eine flächige Zusatzelement (12, 12A, 12B) um eine weitere Schwenkachse schwenkbar ist, die parallel oder senkrecht zu derjenigen Schwenkachse verläuft, um die das mindestens eine Plattformelement (11, 11A, 11B) schwenkbar ist.

6. Fahrzeug nach einem der vorhergehenden Ansprüche, **dadurch gekennzeichnet, dass** die Plattformeinheit (P) mit einem hinteren Bereich einer Vorderkante (30) eines in einem Innenraum des Fahrzeugs (F) vorgesehenen und an die Karosserieöffnung (O) angrenzenden Bodenelements (3) zugewandt ist und wenigstens ein Halteelement (11.1, 11.2) vorgesehen ist, über das ein zu dem hinteren Bereich in einer von der Vorderkante weg weisenden Raumrichtung beabstandeter vorderer Bereich der Plattformeinheit (P) mit einem die Karosserieöffnung (O) berandenden Rahmenabschnitt des Fahrzeugs (F) oder der mindestens einen Tür (1, 1A, 1B) verbunden ist.

7. Fahrzeug nach Anspruch 4 oder 5 und dem Anspruch 6, **dadurch gekennzeichnet, dass** das wenigstens eine Halteelement (11.1, 11.2) in dem vorderen Bereich der Plattformeinheit (P) mit dem Zusatzelement (12, 12A, 12B) mit dem Plattformelement (11, 11A, 11B) verbunden ist.

8. Fahrzeug nach einem der vorhergehenden Ansprüche, **dadurch gekennzeichnet, dass** das mindestens eine Plattformelement (11, 11A, 11B) als Teil der mindestens einen Tür (1, 1A, 1B) oder festgelegt an der mindestens einen Tür (1, 1A, 1B) mit verlagerbar ist, wenn die mindestens eine Tür (1, 1A, 1B) aus der Schließposition in die Öffnungsposition verstellt wird.

9. Fahrzeug nach einem der vorhergehenden Ansprüche, **dadurch gekennzeichnet, dass** zum wenigstens teilweisen Verschließen der einen Karosserieöffnung (O) wenigstens zwei Türen (1A, 1B) vorgesehen sind, insbesondere wobei jeder der mindestens zwei Türen (1A, 1B) eines von zwei Plattformelementen (11A, 11B) zugeordnet ist, die jeweils Teil der Plattformeinheit (P) sind.

10. Fahrzeug nach einem der vorhergehenden Ansprüche, **dadurch gekennzeichnet, dass** das Türblattelement (10, 10A, 10B), bezogen auf eine von einem Fahrzeugboden zu einem Fahrzeugdach des Fahrzeugs (F) weisenden Fahrzeughochrichtung (H), einen oberen Teil der mindestens einen Tür (1, 1A, 1B) bildet und das Plattformelement (11, 11A, 11B) einen unteren Teil der mindestens einen Tür (1, 1A, 1B) bildet, insbesondere wobei für eine Bereitstellung der Plattformeinheit (P), das mindestens eine Plattformelement (11, 11A, 11B) mit wenigstens einer Richtungskomponente bezüglich der Fahrzeughochrichtung (H) nach unten verstellbar ist und das Türblattelement (10, 10A, 10B) separat hiervon nach oben oder, quer zur Fahrzeughochrichtung (H), seitwärts an dem Fahrzeug (F) verstellbar ist.

11. Fahrzeug nach einem der vorhergehenden Ansprüche, **dadurch gekennzeichnet, dass** das Plattformelement (11) in eine Stauraumposition verstellbar ist, in der das Plattformelement (11) zumindest teilweise unterhalb eines fahrzeugseitigen Bodenelements (3) vorliegt, das eine Bodenfläche eines Innenraums des Fahrzeugs (F) definiert.

12. Fahrzeug nach Anspruch 11, **dadurch gekennzeichnet, dass** das Türblattelement (10, 10A, 10B) um wenigstens eine Schwenkachse schwenkbar ist, um die Karosserieöffnung (O) wenigstens teilweise freizugeben, insbesondere wobei das mindestens eine Plattformelement (10) in einem Verstellmodus von wenigstens zwei möglichen Verstellmodi auch mit dem Türblattelement (10, 10A, 10B) gekoppelt schwenkbar ist, um die Karosserieöffnung (O) wenigstens teilweise freizugeben.

13. Fahrzeug nach einem der Ansprüche 6 oder 7, **dadurch gekennzeichnet, dass** das in der Schließposition der mindestens einen Tür (1, 1A, 1B) zumindest einen Teil der Karosserieöffnung (O) verschließende Plattformelement (11, 11A, 11B) separat von dem mindestens einem flächigen Türblattelement (10, 10A, 10B) der Tür (1, 1A, 1B) mithilfe des wenigstens einen Halteelements (11.1, 11.2) entlang einer seitlichen, die Karosserieöffnung berandenden Rahmenstruktur verstellbar ist, insbesondere wobei an der seitlichen Rahmenstruktur eine Führungsschiene (2.1, 2.2) vorgesehen ist, an dem ein Abschnitt des Halteelements (11.1, 11.2) verschieblich gehalten ist.

## Claims

1. A vehicle, comprising
- a bodywork opening (O), which can at least partially be closed by at least one door (1, 1A, 1B) disposed in a closed position, and
- a flat platform unit (P), which is provided to facilitate access into the vehicle (F) via the bodywork opening (O), when the at least one door (1, 1A, 1B) is disposed in an open position,
wherein at least part of the flat platform unit (P) is formed by at least one adjustable, flat platform element (11, 11A, 11B), which
a) forms part of the at least one door (1, 1A, 1B), which in the closed position closes at least part of the bodywork opening (O), or
b) in at least one adjustment position, is fixed to and/or supported on a flat door leaf element (10, 10A, 10B) of the at least one door (1, 1A, 1B),
**characterized in that**
- the platform element (11, 11A, 11B), which in the closed position of the at least one door (1, 1A, 1B) closes at least part of the bodywork opening (O), is adjustable separately from at least one flat door leaf element (10, 10A, 10B) of the door (1, 1A, 1B), which in the closed position together with the platform element (11, 11A, 11B) closes at least part of the bodywork opening (O), wherein the at least one platform element (11, 11A, 11B) is disposed in a first adjustment position when the at least one platform element (11, 11A, 11B) closes at least part of the bodywork opening (O) and cannot be used to facilitate access into the vehicle (F), and
- the at least one platform element (11, 11A, 11B) can be adjusted between the first adjustment position and a second adjustment position, which defines a position of use of the platform unit (P) in which the platform element (11, 11A, 11B) can be used to facilitate access into the vehicle (F), wherein the at least one platform unit (P) in its position of use is variable in height and/or inclination with respect to a floor present in a vehicle interior of the vehicle (F).

2. The vehicle according to claim 1, **characterized in that** the platform unit (P) with a rear region faces a front edge (30) of a floor element (3) provided in a vehicle interior of the vehicle (F) and adjoining the bodywork opening (O), and on the platform unit (P) at least one support element (4; 106A, 106B) is provided, via which the platform unit (P) disposed in the position of use in a front region can be supported on a ground present outside the vehicle (F), in particular wherein the support element (4; 106A, 106B) includes a motor drive in order to vary the height and/or inclination of the platform unit (P) disposed in the position of use with respect to the floor.

3. The vehicle according to any of the preceding claims, **characterized in that** the at least one platform element (11, 11A, 11B) can be pivoted about a pivot axis which extends parallel to a vehicle longitudinal direction (L) of the vehicle (F) pointing from a vehicle rear to a vehicle front, or which extends perpendicularly to the vehicle longitudinal direction (L).

4. The vehicle according to any of the preceding claims, **characterized in that** the platform unit (P) furthermore is formed by at least one flat additional element (12, 12A, 12B), which is pivotally or translationally adjustably mounted on the at least one platform element (11, 11A, 11B).

5. The vehicle according to claims 3 and 4, **characterized in that** the at least one flat additional element (12, 12A, 12B) can be pivoted about a further pivot axis which extends parallel or perpendicularly to that pivot axis about which the at least one platform element (11, 11A, 11B) can be pivoted.

6. The vehicle according to any of the preceding claims, **characterized in that** the platform unit (P) with a rear region faces a front edge (30) of a floor element (3) provided in an interior space of the vehicle (F) and adjoining the bodywork opening (O), and there is provided at least one holding element (11.1,11.2) via which a front region of the platform unit (P) spaced apart from the rear region in a spatial direction pointing away from the front edge is connected to a frame portion of the vehicle (F) bordering the bodywork opening (O) or to the at least one door (1, 1A, 1B).

7. The vehicle according to claim 4 or 5 and claim 6, **characterized in that** in the front region of the platform unit (P) the at least one holding element (11.1, 11.2) is connected to the platform element (11, 11A, 11B) by means of the additional element (12, 12A, 12B).

8. The vehicle according to any of the preceding claims, **characterized in that** the at least one platform element (11, 11A, 11B) as part of the at least one door (1, 1A, 1B) or fixed to the at least one door (1, 1A, 1B) can also be displaced when the at least one door (1, 1A, 1B) is adjusted from the closed position into the open position.

9. The vehicle according to any of the preceding claims, **characterized in that** for at least partially closing the one bodywork opening (O) at least two doors (1A, 1B) are provided, in particular wherein to each of the at least two doors (1A, 1B) one of two platform elements (11A, 11B) is associated, which each form part of the platform unit (P).

10. The vehicle according to any of the preceding claims, **characterized in that** the door leaf element (10, 10A, 10B), based on a vehicle height direction (H) pointing from a vehicle floor to a vehicle roof of the vehicle (F), forms an upper part of the at least one door (1, 1A, 1B) and the platform element (11, 11A, 11B) forms a lower part of the at least one door (1, 1A, 1B), in particular wherein for a provision of the platform unit (P) the at least one platform element (11, 11A, 11B) can be adjusted downwards with respect to the vehicle height direction (H) with at least one direction component, and the door leaf element (10, 10A, 10B) can be separately adjusted upwards, transversely to the vehicle height direction (H), sidewards on the vehicle (F).

11. The vehicle according to any of the preceding claims, **characterized in that** the platform element (11) can be adjusted into a stowage space position in which the platform element (11) is at least partially disposed below a vehicle-side floor element (3) which defines a floor surface of an interior space of the vehicle (F).

12. The vehicle according to claim 11, **characterized in that** the door leaf element (10, 10A, 10B) can be pivoted about at least one pivot axis in order to at least partially clear the bodywork opening (O), in particular wherein in one adjustment mode of at least two possible adjustment modes the at least one platform element (10) can also be pivoted when coupled to the door leaf element (10, 10A, 10B), in order to at least partially clear the bodywork opening (O).

13. The vehicle according to any of claims 6 or 7, **characterized in that** the platform element (11, 11A, 11B), which in the closed position of the at least one door (1, 1A, 1B) closes at least part of the bodywork opening (O), can be adjusted separately from the at least one flat door leaf element (10, 10A, 10B) of the door (1, 1A, 1B) by means of the at least one holding element (11.1, 11.2) along a lateral frame structure bordering the bodywork opening, in particular wherein a guide rail (2.1, 2.2) is provided on the lateral frame structure, on which a portion of the holding element (11.1, 11.2) is shiftably held.

## Revendications

1. Véhicule, comprenant
- une ouverture de carrosserie (O), qui peut être fermée au moins partiellement par au moins une porte (1, 1A, 1B) présente dans une position fermée, et
- une unité de plate-forme plate (P), qui est prévue pour faciliter un accès au véhicule (F) via l'ouverture de carrosserie (O) lorsque ladite au moins une porte (1, 1A, 1B) est présente dans une position ouverte,
au moins une partie de l'unité de plate-forme plate (P) étant formée par au moins un élément de plate-forme plate réglable (11, 11A, 11B), qui
a) forme une partie de ladite au moins une porte (1, 1A, 1B) qui, en position fermée, ferme au moins une partie de l'ouverture de carrosserie (O), ou
b) est fixé et/ou s'appuie dans au moins une position de réglage sur un élément de panneau de porte plat (10, 10A, 10B) de ladite au moins une porte (1, 1A, 1B),
**caractérisé en ce que**
- l'élément de plate-forme (11, 11A, 11B) qui, dans la position fermée de ladite au moins une porte (1, 1A, 1B), ferme au moins une partie de l'ouverture de carrosserie (O), peut être réglé séparément d'au moins un élément de panneau de porte plat (10, 10A, 10B) de la porte (1, 1A, 1B) qui, dans la position fermée, conjointement avec l'élément de plate-forme (11, 11A, 11B) ferme au moins une partie de l'ouverture de carrosserie (O), ledit au moins un élément de plate-forme (11, 11A, 11B) étant dans une première position de réglage lorsque ledit au moins un élément de plate-forme (11, 11A, 11B) ferme au moins une partie de l'ouverture de carrosserie (O) et n'est pas utilisable pour faciliter un accès au véhicule (F), et
- ledit au moins un élément de plate-forme (11, 11A, 11B) est réglable entre la première position de réglage et une deuxième position de réglage qui définit une position d'utilisation de l'unité de plate-forme (P), dans laquelle l'élément de plate-forme (11, 11A, 11B) peut être utilisé pour faciliter un accès au véhicule (F), ladite au moins une unité de plate-forme (P) pouvant être modifiée dans sa position d'utilisation en hauteur et/ou en inclinaison par rapport à un plancher présent dans un habitacle de véhicule du véhicule (F).

2. Véhicule selon la revendication 1, **caractérisé en ce que** l'unité de plate-forme (P) est tournée avec une zone arrière vers un bord avant (30) d'un élément de plancher (3) prévu dans un habitacle de véhicule du véhicule (F) et adjacent à l'ouverture de carrosserie (O) et **en ce qu'**au moins un élément d'appui (4 ; 106A, 106B), par l'intermédiaire duquel l'unité de plate-forme (P) peut s'appuyer, en position d'utilisation, dans une zone avant, sur un sol présent à l'extérieur du véhicule (F), en particulier l'élément d'appui (4 ; 106A, 106B) présentant un entraînement motorisé, afin de modifier la hauteur et/ou l'inclinaison de l'unité de plate-forme (P) présente en position d'utilisation par rapport au sol.

3. Véhicule selon l'une quelconque des revendications précédentes, **caractérisé en ce que** l'au moins un élément de plate-forme (11, 11A, 11B) peut pivoter autour d'un axe de pivotement qui s'étend parallèlement à une direction longitudinale (L) du véhicule (F) orientée depuis l'arrière du véhicule vers l'avant du véhicule ou qui s'étend perpendiculairement à la direction longitudinale (L) du véhicule.

4. Véhicule selon l'une quelconque des revendications précédentes, **caractérisé en ce que** l'unité de plate-forme (P) est en outre formée par au moins un élément supplémentaire plat (12, 12A, 12B) qui est monté sur l'au moins un élément de plate-forme (11, 11A, 11B) de manière à pouvoir pivoter ou se déplacer en translation.

5. Véhicule selon les revendications 3 et 4, **caractérisé en ce que** l'au moins un élément supplémentaire plat (12, 12A, 12B) peut pivoter autour d'un autre axe de pivotement qui s'étend parallèlement ou perpendiculairement à l'axe de pivotement autour duquel l'au moins un élément de plate-forme (11, 11A, 11B) peut pivoter.

6. Véhicule selon l'une quelconque des revendications précédentes, **caractérisé en ce que** l'unité de plate-forme (P) est orientée avec une zone arrière vers un bord avant (30) d'un élément de plancher (3) prévu dans un espace intérieur du véhicule (F) et adjacent à l'ouverture de carrosserie (O) et au moins un élément de retenue (11.1, 11.2), par lequel une zone avant de l'unité de plate-forme (P), espacée de la zone arrière dans une direction spatiale s'éloignant du bord avant, est reliée à une section de cadre du véhicule (F) ou de ladite au moins une porte (1, 1A, 1B) bordant l'ouverture de carrosserie (O).

7. Véhicule selon la revendication 4 ou 5 et la revendication 6, **caractérisé en ce que** l'au moins un élément de retenue (11.1, 11.2) est relié à l'élément de plate-forme (11, 11A, 11B) dans la zone avant de l'unité de plate-forme (P) avec l'élément supplémentaire (12, 12A, 12B).

8. Véhicule selon l'une quelconque des revendications précédentes, **caractérisé en ce que** ledit au moins un élément de plate-forme (11, 11A, 11B) est co-déplaçable en tant que partie de ladite au moins une porte (1, 1A, 1B) ou fixé à ladite au moins une porte (1, 1A, 1B) lorsque ladite au moins une porte (1, 1A, 1B) est déplacée de la position fermée à la position ouverte.

9. Véhicule selon l'une quelconque des revendications précédentes, **caractérisé en ce qu'**au moins deux portes (1A, 1B) sont prévues pour fermer au moins partiellement l'une des ouvertures de carrosserie (O), en particulier dans lequel l'un de deux éléments de plate-forme (11A, 11B), qui font chacun partie de l'unité de plate-forme (P), est associée à chacune des au moins deux portes (1A, 1B).

10. Véhicule selon l'une quelconque des revendications précédentes, **caractérisé en ce que** l'élément de panneau de porte (10, 10A, 10B), par rapport à une direction de hauteur de véhicule (H) orientée d'un plancher de véhicule vers un toit de véhicule du véhicule (F), forme une partie supérieure de ladite au moins une porte (1, 1A, 1B), et l'élément de plate-forme (11, 11A, 11B) forme une partie inférieure de ladite au moins une porte (1, 1A, 1B), en particulier dans lequel, pour une mise à disposition de l'unité de plate-forme (P), l'au moins un élément de plate-forme (11, 11A, 11B) peut être déplacé vers le bas avec au moins une composante directionnelle par rapport à la direction de hauteur de véhicule (H) et l'élément de panneau de porte (10, 10A, 10B) peut être déplacé séparément de cela vers le haut ou, transversalement à la direction de hauteur de véhicule (H), latéralement sur le véhicule (F).

11. Véhicule selon l'une quelconque des revendications précédentes, **caractérisé en ce que** l'élément de plate-forme (11) est réglable dans une position de rangement, dans laquelle l'élément de plate-forme (11) est au moins partiellement présent en dessous d'un élément de plancher (3) côté véhicule, qui définit une surface de plancher d'un espace intérieur du véhicule (F).

12. Véhicule selon la revendication 11, **caractérisé en ce que** l'élément de panneau de porte (10, 10A, 10B) peut pivoter autour d'au moins un axe de pivotement pour dégager au moins partiellement l'ouverture de carrosserie (O), en particulier dans lequel l'au moins un élément de plate-forme (10) peut également pivoter de manière couplée avec l'élément de panneau de porte (10, 10A, 10B) dans un mode de réglage parmi au moins deux modes de réglage possibles pour dégager au moins partiellement l'ouverture de carrosserie (O).

13. Véhicule selon l'une quelconque des revendications 6 ou 7, **caractérisé en ce que** l'élément de plate-forme (11, 11A, 11B) fermant au moins une partie de l'ouverture de carrosserie (O) dans la position de fermeture de ladite au moins une porte (1, 1A, 1B), séparément de l'au moins un élément de panneau de porte plat (10, 10A, 10B) de la porte (10, 10A, 10B), peut être déplacé à l'aide de l'au moins un élément de retenue (11.1, 11.2) le long d'une structure de cadre latérale bordant l'ouverture de carrosserie, en particulier un rail de guidage (2.1, 2.2) étant prévu sur la structure de cadre latérale, sur lequel une section de l'élément de retenue (11.1, 11.2) est maintenue de manière coulissante.
